# EUROPEAN PATENT SPECIFICATION

(11) **EP 4 242 215 B1**
(45) Date of publication and mention of the grant of the patent: **25.02.2026**
(21) Application number: 21889197.6
(22) Date of filing: 02.11.2021
(51) Int. Cl.: C07F 7/18, B32B 9/00, C09J 7/30, B32B 7/02, B32B 7/12, C08J 7/06, C08J 7/12

(54) **REACTIVITY-IMPARTING COMPOUND, METHOD FOR PRODUCING REACTIVITY-IMPARTING COMPOUND, AND LAYERED BODY**
REAKTIVITÄTSVERLEIHENDE VERBINDUNG, VERFAHREN ZUR HERSTELLUNG DER REAKTIVITÄTSVERLEIHENDEN VERBINDUNG UND SCHICHTKÖRPER
COMPOSÉ CONFÉRANT UNE RÉACTIVITÉ, PROCÉDÉ DE PRODUCTION D'UN COMPOSÉ CONFÉRANT UNE RÉACTIVITÉ ET CORPS STRATIFIÉ

(30) Priority: 05.11.2020 JP 2020185196; 07.09.2021 JP 2021145578
(43) Date of publication of application: 13.09.2023
(73) Proprietor: NATIONAL UNIVERSITY CORPORATION, IWATE UNIVERSITY, Morioka-shi, Iwate 020-8550 (JP)
(72) Inventor: MURAOKA Hiroki, Morioka-shi, Iwate 020-8550 (JP); NAGAUSHI Kazuki, Morioka-shi, Iwate 020-8550 (JP); SANG Jing, Morioka-shi, Iwate 020-8550 (JP)
(74) Representative: Ström & Gulliksson AB
(86) International application number: PCT/JP2021/040407
(87) International publication number: WO 2022/097644

(56) References cited:
- WO-A1-2012/046651
- WO-A1-2013/083743
- YE KEHAN; SINAWANG PRIMA DEWI; TOK ALFRED IING YOONG; MARKS ROBERT S.: "Photoinducible silane diazirine as an effective crosslinker in the construction of a chemiluminescent immunosensor targeting a modelE. colianalyte", SENSORS AND ACTUATORS B: CHEMICAL, ELSEVIER BV, NL, vol. 256, 1 January 1900 (1900-01-01), NL , pages 234 - 242, XP085262029, ISSN: 0925-4005, DOI: 10.1016/j.snb.2017.10.058
- TROMMER MARTIN, SANDER WOLFRAM: "(Trimethoxysilyl)carbene: Photochemistry, Oxidation, and Carbonylation of a Silylcarbene", ORGANOMETALLICS, AMERICAN CHEMICAL SOCIETY, vol. 15, no. 2, 23 January 1996 (1996-01-23), pages 736 - 740, XP055928972, ISSN: 0276-7333, DOI: 10.1021/om950782i

## Description

### [Technical Field]

The present invention relates to a reactivity-imparting compound, a method for producing a reactivity-imparting compound, and a layered body.

Priority is claimed on Japanese Patent Application No. 2020-185196, filed on November 5, 2020, and Japanese Patent Application No. 2021-145578, filed on September 7, 2021.

### [Background Art]

Composite materials consisting of different materials bonded together, for example, a layered body with a metal film formed on an inorganic base material or a polymer base material, are used in circuit boards for cellular phones, vehicle members, or the like.

In layered bodies, poor adhesion between materials causes delamination between the materials. For this reason, improvement in adhesion is an important property for layered bodies. Techniques for improving adhesion between materials include, for example, a technique for forming unevenness on the surface of a base material. A portion of the metal film penetrates into the unevenness on the surface of the base material, which exerts an anchor effect and improves adhesion.

However, for example, if the surface of a base material for circuit boards is uneven, the transmission distance of signals becomes longer, resulting in transmission loss. For this reason, it is difficult to use the technique for forming unevenness on the surface of a base material for circuit board applications.

As a technique for improving adhesion strength without forming unevenness on a surface, there is a technique for introducing hydroxyl groups into a substrate through corona discharge treatment. However, because the corona discharge treatment may degrade a base material and introduces only a small number of hydroxyl groups, improvement in adhesion is limited.

As another technique for improving adhesion strength without forming unevenness on a surface, there is a technique for reacting a compound capable of imparting reactivity to the surface of a base material with the surface of the base material. For example, organofunctional silane compounds have been developed to improve the performance of a layered bodies such as polymeric material glass and metals. This method uses a coupling agent, that is, a bifunctional molecule, which reacts with both a polymeric material and a bonding target (for example, a metal) to form a covalent bond. Specifically speaking, silane coupling agents are organofunctional silane monomers which have binary reactivity. This property allows a functional group at one end of a molecule to be hydrolyzed to form a silanol which then enables bonding through condensation or the like with similar functional groups on glass or the like or OH groups on metal oxides. At the other end of the silane molecule, there is a functional group capable of reacting with an organic substance such as an amino group or a mercapto group. In this manner, silane coupling agents are known as very useful molecules that covalently bond organic materials to other materials.

Patent Document 1 discloses a method for forming a metal film, the method including: a step of providing an agent containing a specific compound on the surface of a base body; and a step of providing a metal film on the surface of a compound through a wet-type plating method, in which the compound is a compound having an OH group or an OH-producing group, an azide group, and a triazine ring in one molecule, and in which the base body is composed of a polymer. Molecules having azide groups are irradiated with ultraviolet light to produce nitrenes from the azide groups, and the produced nitrenes react with the surface of a base material, whereby high adhesion can be obtained.

Document 2 discloses a process for forming a metal film comprising a step (X) of applying an agent containing a compound (α) onto the surface of a base and a step (Y) of forming a metal film on the surface of the compound (α) by a wet-mode plating technique, wherein the compound (α) is a compound having either an OH group or an OH-generating group, an azide group and a triazine ring per molecule, and the base comprises a polymer.

Patent Document 3 relates to hydrolysable silanes useful in the modification of elastomers, and as coupling agents for diene elastomer compositions containing a filler. In particular the disclosure relates to novel hydrolysable silanes containing an aziridine ring herein named (Az).

Non Patent Document 1 discloses a photoinducible silane diazirine that was developed as an effective crosslinker in the construction of a chemiluminescent immunosensor targeting a model E. coli analyte.

Non Patent Document 2 discloses that photolysis (λ > 345 nm) of matrix-isolated (trimethoxysilyl)diazomethane leads to the formation of (trimethoxysilyl)carbene, which was characterized by IR and UV-vis spectroscopy. The photochemistry, reaction with molecular oxygen, and carbonylation of 2e were studied in argon matrices at cryogenic temperatures. These experiments demonstrate that 2e is a triplet ground state carbene.

### [Citation List]

### [Patent Document]

[Patent Document 1]
   Japanese Patent No. 4936344
[Patent Document 2]
   WO 2012/046651
[Patent Document 3]
   WO 2013/083743

### [Non Patent Document]

[Non Patent Document 1]
   Ye Kehan; Sinawang Prima Dewi; Tok Alfred Iing Yoong; Marks Robert S.: "Photoinducible silane diazirine as an effective crosslinker in the construction of a chemiluminescent immunosensor targeting a model E. coli analyte", Sensors and Actuators B: Chemical, Elsevier BV, NL, vol. 256, 12 October 2017 (2017-10-12), pages 234-242
[Non Patent Document 2]
   Trammer Martin, Sander Wolfram: "(Trimethoxysilyl)carbene: Photochemistry, Oxidation, and Carbonylation of a Silylcarbene", Organometallics, American Chemical Society, vol. 15, no. 2, 23 January 1996 (1996-01-23), pages 736-740

### [Summary of Invention]

### [Technical Problem]

However, there is currently a demand for a method that provides higher adhesion than the technique of Patent Document 1. In addition, in the technique of Patent Document 1, since the molecules having azide groups are irradiated with short-wavelength ultraviolet light, there has been a problem in that the base material deteriorates and the adhesion is reduced.

The present invention has been made in consideration of the above-described problems, and an object of the present invention is to provide a reactivity-imparting compound that inhibits photodegradation of a base material and provides high adhesion, a method for producing a reactivity-imparting compound, and a layered body.

### [Solution to Problem]

In order to solve the problems, the present invention proposes the following means.
<1> A reactivity-imparting compound according to one embodiment of the present invention includes, in one molecule: a silane coupling moiety represented by Formula (1) below; and a diazirine group. 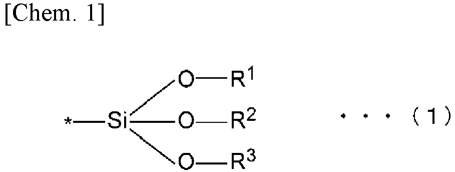 [In Formula (1), * represents an adjacent carbon atom, and R¹, R², and R³ each represents a hydrogen atom or an alkyl group and may be the same as or different from each other.]
<2> The reactivity-imparting compound according to <1> above is a compound represented by Formula (2) below. 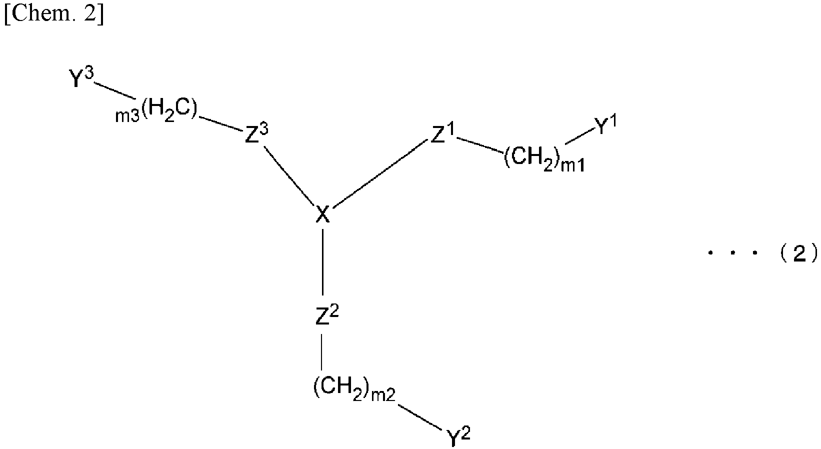 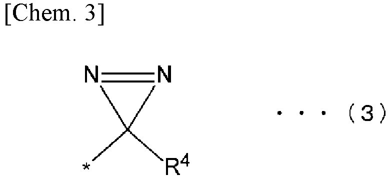 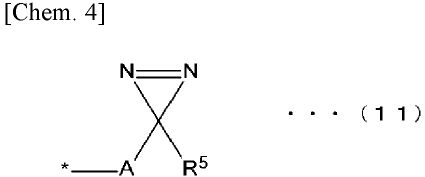 [In Formula (2), X represents a triazine ring or a benzene ring, Z¹, Z², and Z³ each represents any one of O, NH, S, or CH₂, m1, m2, and m3 each represents an integer of 1 to 10, Y¹, Y², and Y³ are each the silane coupling moiety or a diazirine group represented by Formula (3) or (11) above, at least one of Y¹, Y², and Y³ is the silane coupling moiety, and at least one of Y¹, Y², and Y³ is the diazirine group; in Formula (3) above, * represents an adjacent carbon atom and R⁴ is an arbitrary functional group; and in Formula (11) above, * represents an adjacent carbon atom, R⁵ is an arbitrary functional group, and A is an arylene group or a divalent heterocyclic group.]
<3> In the reactivity-imparting compound according to <2>, the X may be a triazine ring.
<4> In the reactivity-imparting compound according to <2> or <3>, Z¹, Z², and Z³ each may be NH or O.
<5> The reactivity-imparting compound according to <4> above may be a compound represented by Formula (4) below. 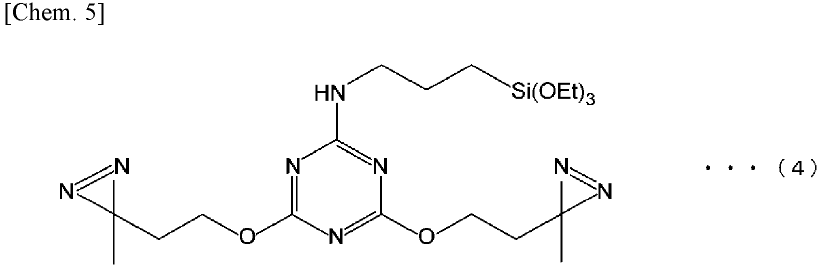
<6> The reactivity-imparting compound according to <4> above may be a compound represented by Formula (12) below. 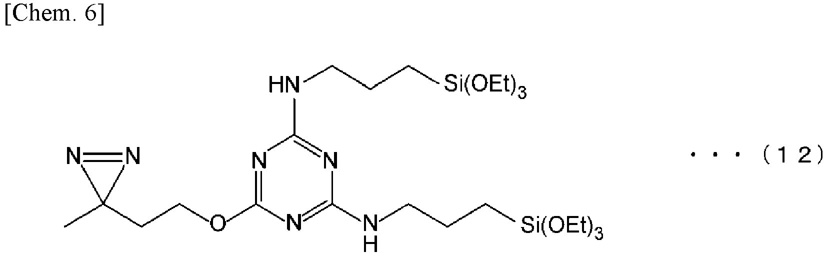
<7> The reactivity-imparting compound according to <4> above may be a compound represented by Formula (13) below. 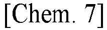 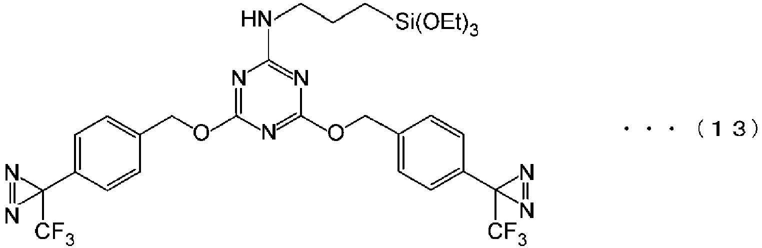
<8> The reactivity-imparting compound according to <4> above may be a compound represented by Formula (14) below. 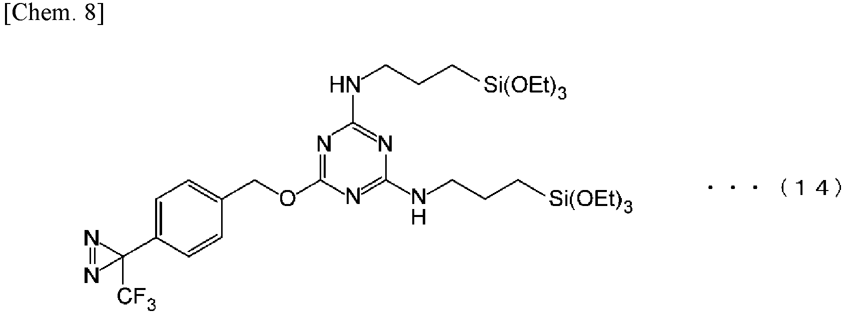
<9> A method for producing a reactivity-imparting compound according to one embodiment of the present invention includes: a diazirine group-imparting step of reacting a compound containing a trihalogenated triazine ring with a compound containing a hydroxyl group and a diazirine group to obtain a diazirine group-imparted compound to which one or more diazirine groups are imparted; and a silane coupling moiety-imparting step of reacting the diazirine group-imparted compound with a compound containing an amino group and a silane coupling moiety represented by Formula (6) below. 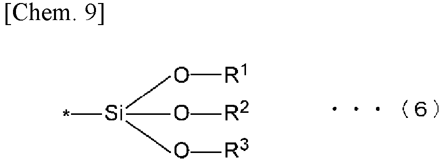 [In Formula (6), * represents an adjacent carbon atom, and R¹, R², and R³ each represents a hydrogen atom or an alkyl group and may be the same as or different from each other.]
<10> The method for producing a reactivity-imparting compound according to <9>, in which, in the diazirine group-imparting step, two diazirine groups may be imparted.
<11> The method for producing a reactivity-imparting compound according to <9> or <10>, in which a compound of Formula (18) below may be reacted with 3-aminopropyltriethoxysilane to obtain a compound of Formula (4) below. 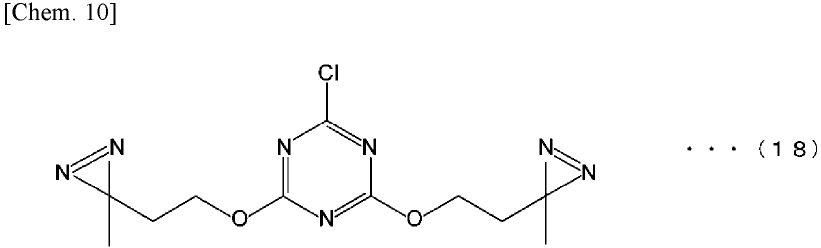 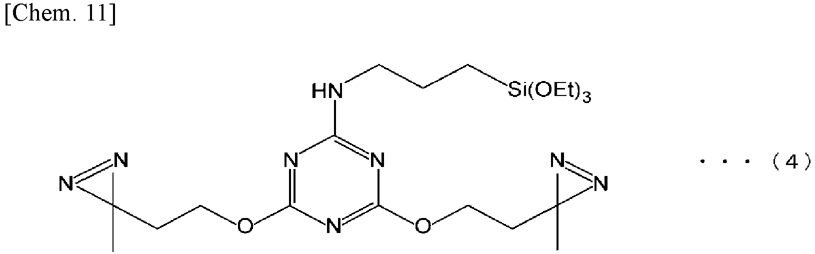
<12> The method for producing a reactivity-imparting compound according to <9> or <10> above, in which a compound of Formula (20) below may be reacted with 3-aminopropyltriethoxysilane to obtain a compound of Formula (13) below. 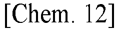 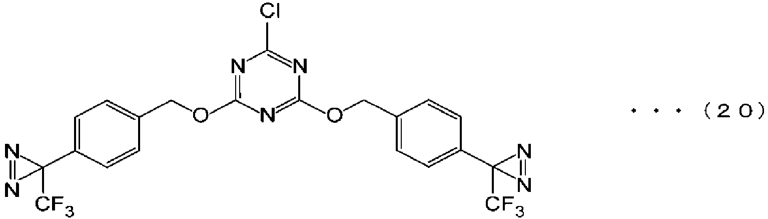 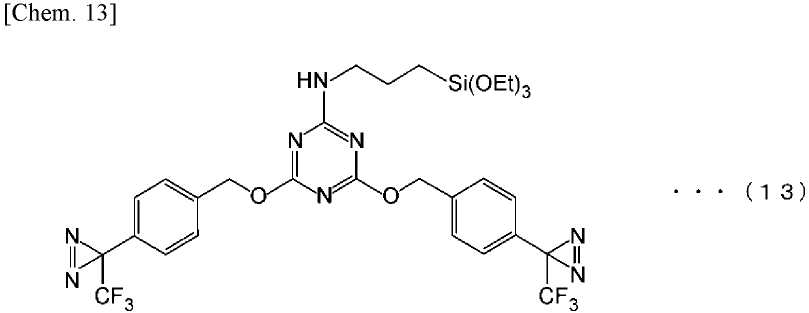
<13> The method for producing a reactivity-imparting compound according to <9>, in which, in the diazirine group-imparting step, one diazirine group may be imparted.
<14> The method for producing a reactivity-imparting compound according to <9> or <13>, in which a compound of Formula (15) below may be reacted with 3-aminopropyltriethoxysilane to obtain a compound of Formula (12) below. 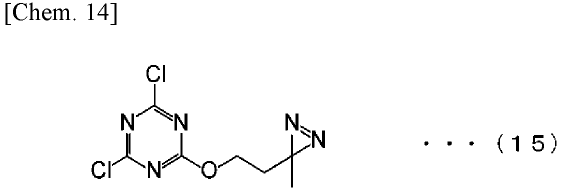 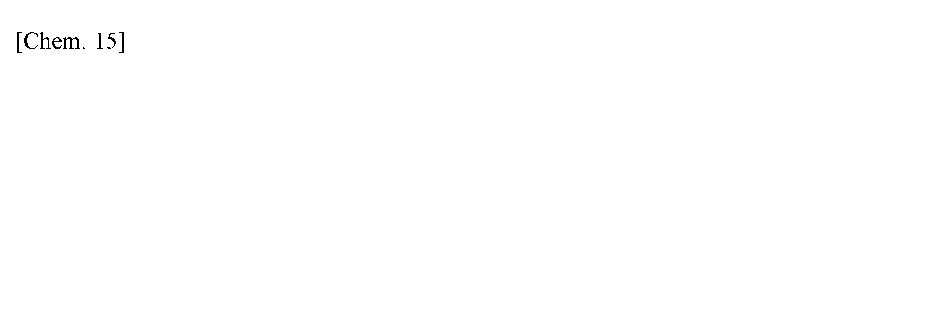 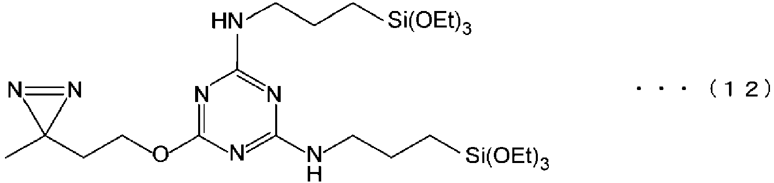
<15> The method for producing a reactivity-imparting compound according to <9> or <13> above, in which a compound of Formula (17) below may be reacted with 3-aminopropyltriethoxysilane to obtain a compound of Formula (14) below. 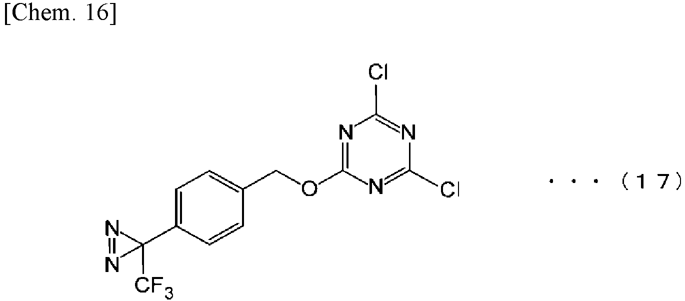 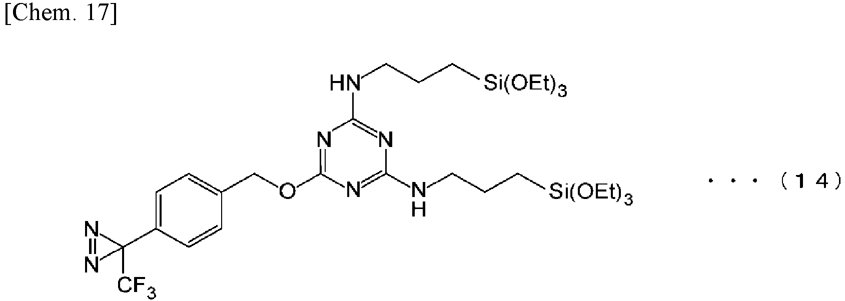
<16> A layered body according to one aspect of the present invention includes: a first base material; a reactivity-imparting compound layer which is provided on the first base material and composed of the reactivity-imparting compound according to any one of <1> to <8> above; and a second base material provided on the reactivity-imparting compound layer.

### [Advantageous Effects of Invention]

According to the above-described aspects of the present invention, it is possible to provide a reactivity-imparting compound that inhibits photodegradation of a base material and provides high adhesion, a method for producing a reactivity-imparting compound, and a layered body.

### [Brief Description of Drawings]

FIG. 1 is a cross-sectional schematic diagram of a layered body in which a reactivity-imparting compound according to an example of the present invention is used.
FIG. 2 is an estimated light absorption spectrum of a reactivity-imparting compound according to an example of the present invention.
FIG. 3 is a light absorption spectrum of a reactivity-imparting compound according to a comparative example of the present invention.
FIG. 4 shows light absorption spectra of reactivity-imparting compounds according to Example 1 of the present invention.
FIG. 5 shows light absorption spectra of reactivity-imparting compounds according to Example 2 of the present invention.
FIG. 6 is a diagram showing changes in a light absorption spectrum when a reactivity-imparting compound according to Reference Example 1 is irradiated with light.
FIG. 7 is a diagram showing changes in a light absorption spectrum when a reactivity-imparting compound according to Reference Example 2 is irradiated with light.

### [Description of Embodiments]

Hereinafter, reactivity-imparting compounds according to embodiments of the present invention will be described. However, the present invention is not limited to the following embodiments.

### (Reactivity-imparting compound)

A reactivity-imparting compound according to the present embodiment includes, in one molecule: a silane coupling moiety represented by Formula (1) below; and a diazirine group. * in Formula (1) below represents an adjacent carbon atom.

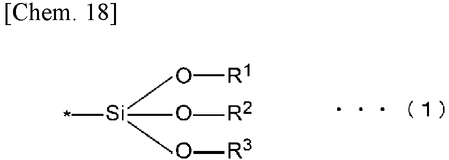

The reactivity-imparting compound according to the present embodiment includes one or more silane coupling moieties. Silane coupling moieties are moieties that produce silanol groups through hydrolysis. Produced silanol groups react with metals of a metal layer in a layered body and improve adhesion. That is, the adhesion with respect to the metal layer is improved by adsorbing the reactivity-imparting compound according to the present embodiment on the surface of a base material and producing silanol groups. The adhesion with respect to the metal layer is improved as the number of silane coupling moieties in the reactivity-imparting compound increases. In a case where the adhesion with respect to the metal layer is low, the number of silane coupling moieties is preferably increased.

R¹, R², and R³ in the silane coupling moiety in Formula (1) above each represents a hydrogen atom or an alkyl group. R¹, R², and R³ may be the same as or different from each other. Examples of alkyl groups for R¹, R², and R³ include a methyl group, an ethyl group, a propyl group, an isopropyl group, a butyl group, and an isobutyl group. Alkyl group for R¹, R², and R³ preferably is a methyl group or an ethyl group.

The reactivity-imparting compound according to the present embodiment includes one or more diazirine groups. Diazirine groups are chemically stable, and produce carbenes with emission of long-wavelength ultraviolet rays. Carbenes are highly reactive and can form covalent bonds with molecules near the carbenes. For this reason, after applying the reactivity-imparting compound according to the present embodiment to the surface of a base material or after adsorbing the reactivity-imparting compound on the surface of the base material by immersing the base material in a solution of the reactivity-imparting compound, light can be emitted to form covalent bonds between the base material and the reactivity-imparting compound. Accordingly, high adhesion can be obtained between the base material and the reactivity-imparting compound according to the present embodiment. Furthermore, since carbenes can provide higher adhesion than nitrenes produced from azide groups, higher adhesion than a reactivity-imparting compound in the related art in which an azide group is used can be obtained. In addition, since diazirine groups have an absorption band on a longer wavelength side than azide groups and diazomethyl groups producing carbenes, photodegradation of a resin can be suppressed. The adhesion with respect to the base material is improved as the number of diazirine groups in the reactivity-imparting compound increases. The number of diazirine groups is preferably increased in a case where, for example, a less adhesive base material is used.

The reactivity-imparting compound is a compound represented by Formula (2) below.

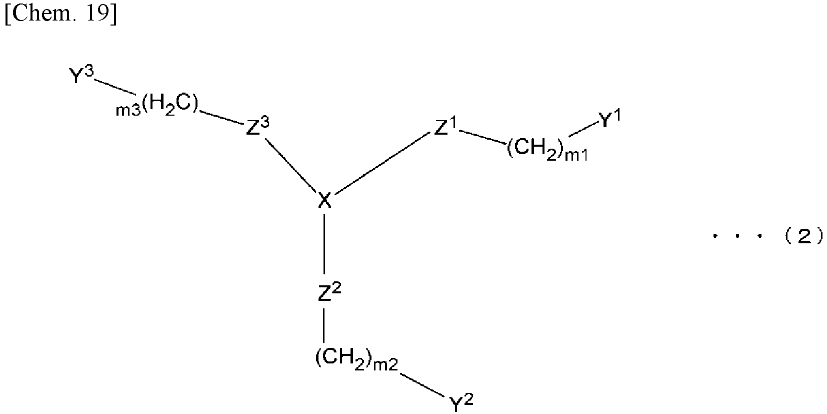

X in Formula (2) above represents a triazine ring or a benzene ring. X functions as a spacer between a silane coupling moiety and a diazirine group. In addition, in X in Formula (2) above, the bonding position between Z¹, Z², and Z³ can be adjusted to adjust the positional relationship between a silane coupling moiety related to adsorption with a metal layer of a layered body and a diazirine group related to adsorption with a base material of the layered body. Accordingly, the adhesion between the base material and the metal layer can be adjusted. X is preferably a triazine ring for ease of production and to adjust the positional relationship between a diazirine group and a silane coupling moiety. The triazine ring may be any of 1,2,3-triazine, 1,2,4-triazine, and 1,3,5-triazine, but 1,3,5-triazine is particularly preferable. In a case where X in Formula (2) above is a benzene ring, the bonding position between Z¹, Z², and Z³ is not particularly limited, but bonding at positions 1, 3, and 5 is preferable. In the case where X is a benzene ring, moieties other than Z¹, Z², and Z³ are not particularly limited, and may be a hydrogen atom or may be an arbitrary functional group such as a hydroxyl group or a methyl group.

Z¹, Z², and Z³ in Formula (2) above are each preferably any one of O, NH, S, or CH₂. Z¹, Z², and Z³ are each preferably O or NH for ease of production and chemical stability, for example. Z¹, Z², and Z³ may be the same as or different from each other.

An integer of m1, m2, or m3 represents the length of a spacer between a silane coupling moiety and a diazirine group. By adjusting the numbers of m1, m2, and m3, the contact frequency between the base material and a diazirine group and the contact frequency between the metal layer and a silane coupling moiety can be adjusted. m1, m2, or m3 in Formula (2) above are preferably integers of 1 to 10. m1, m2, or m3 are preferably integers of 1 to 6. The integers of m1, m2, or m3 may be the same as or different from each other.

Y¹, Y², and Y³ are each a silane coupling moiety represented by Formula (1) above or a diazirine group represented by Formula (3) or (11) below. At least one of Y¹, Y², and Y³ is a silane coupling moiety represented by Formula (1) above. In Formula (2) above, the number of silane coupling moieties is 1 or 2. Since the reactivity-imparting compound represented by Formula (2) above has at least one silane coupling moiety, the adhesion between the reactivity-imparting compound and the metal layer can be improved. For better adhesion with respect to the metal layer, the number of silane coupling moieties is set to 2.

At least one of Y¹, Y², and Y³ is a diazirine group (diazirine-containing group) represented by Formula (3) or (11) below. In Formula (2) above, the number of diazirine groups is 1 or 2. Since the reactivity-imparting compound represented by Formula (2) above has at least one silane coupling moiety, one or more strong covalent bonds can be formed between the reactivity-imparting compound and the base material. For this reason, the reactivity-imparting compound according to the present embodiment has excellent adhesion with respect to the base material. For better adhesion with respect to the metal layer, the number of diazirine groups is set to 2. * in Formula (3) below represents an adjacent carbon atom. R⁴ in Formula (3) below is not particularly limited and is an arbitrary functional group. Since the presence of diazirine groups near a terminal increases the contact frequency with the base material, R⁴ is preferably a hydrogen atom, a methyl group, an ethyl group, a trifluoromethyl group, or a pentafluoroethyl group. In particular, R⁴ is preferably a trifluoromethyl group or a pentafluoroethyl group to improve the photoreaction efficiency.

* in Formula (11) below represents an adjacent carbon atom. R⁵ in Formula (11) below is not particularly limited and is an arbitrary functional group. Since the presence of diazirine groups near a terminal increases the contact frequency with the base material, R⁵ is preferably a hydrogen atom, a methyl group, an ethyl group, a trifluoromethyl group, or a pentafluoroethyl group. In particular, R⁵ is preferably a trifluoromethyl group or a pentafluoroethyl group to improve the photoreaction efficiency. A in Formula (11) below is an arylene group or a divalent heterocyclic group. Some or all hydrogen atoms in the arylene group or divalent heterocyclic group may be substituted with halogen atoms, alkyl groups, and the like.

Examples of arylene groups for A in Formula (11) below include a 1,3-phenylene group, a 1,4-phenylene group, a 1,4-naphthylene group, a 1,5-naphthylene group, and a 2,6-naphthylene group.

Examples of divalent heterocyclic groups for A in Formula (11) below include a divalent group excluding two hydrogen atoms out of hydrogen atoms directly bonded to carbon atoms or heteroatoms constituting a heterocyclic ring such as furan, thiophene, and pyridine.

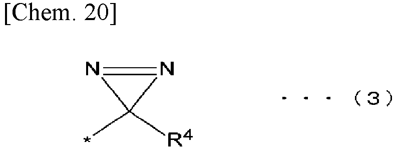

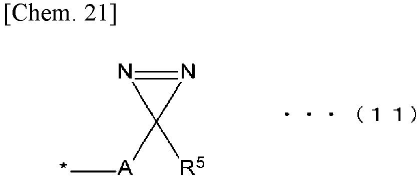

Specific examples of Formula (2) above include N²,N⁴-bis(2-(3-methyl-3H-diazirin-3-yl)ethyl)-N⁶-((3-triethoxysilyl)propyl)-1,3,5-triazine-2,4,6-triamine represented by Formula (5) below, 4,6-bis(2-(3-methyl-3H-diazirin-3-yl)ethoxy)-N-((3-triethoxysilyl)propyl)-1,3,5-triazine-2-amine represented by Formula (4) below, 6-(2-(3-methyl-3H-diazirin-3-yl)ethoxy)-N²,N⁴-bis(3-(triethoxysilyl)propyl)-1,3,5-triazine-2,4-diamine represented by Formula (12) below, N-((3-triethoxysilyl)propyl)-4,6-bis((4-(3-(trifluoromethyl)-3H-diazirin-3-yl)benzyl)oxy)-1,3,5-triazine-2-amine represented by Formula (13) below, and N²,N⁴-bis((3-triethoxysilyl)propyl)-6-((4-(3-(trifluoromethyl)-3H-diazirin-3-yl)benzyl)oxy)-1,3,5-triazine-2,4-diamine represented by Formula (14) below.

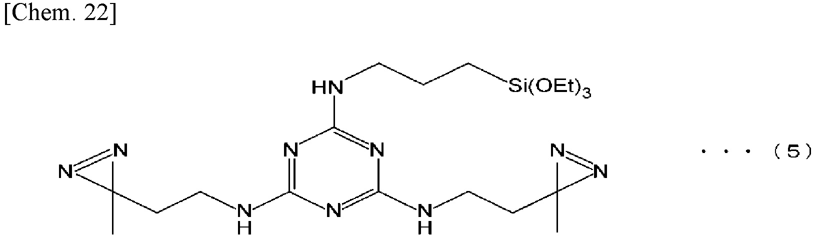

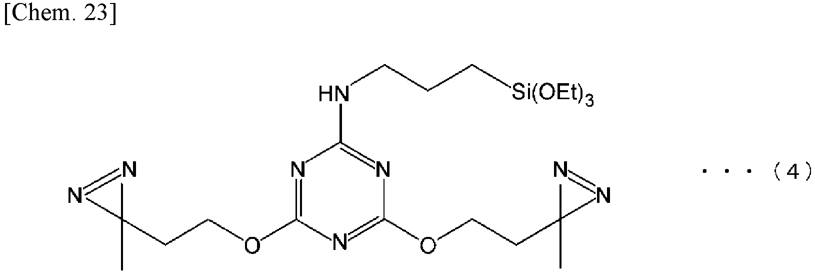

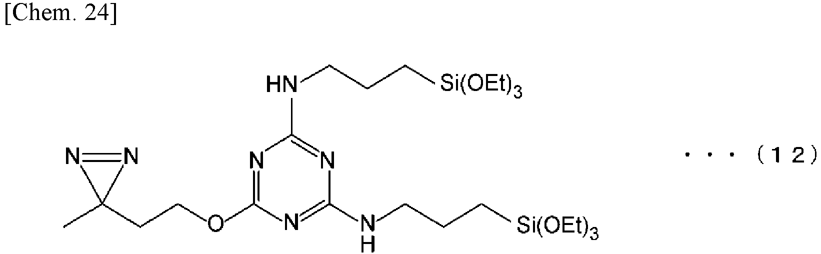

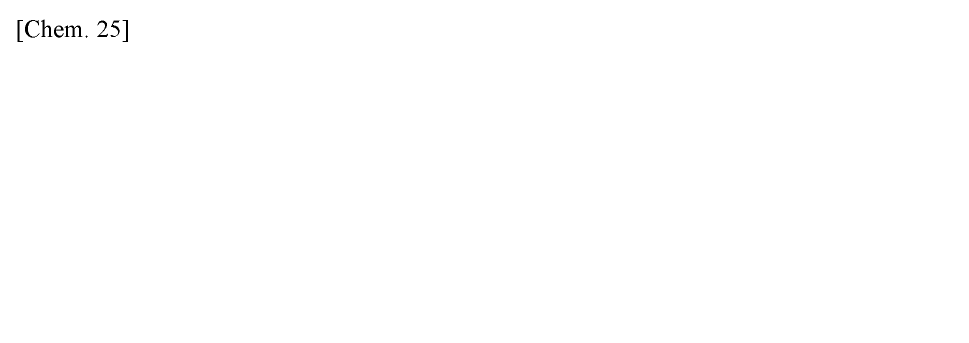

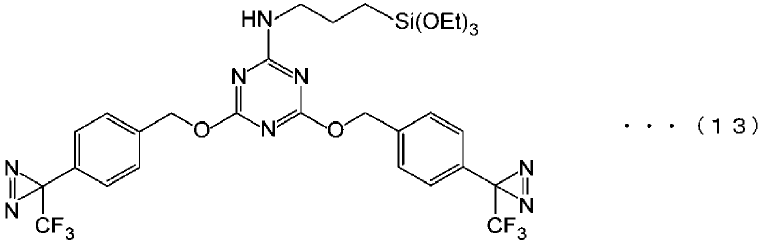

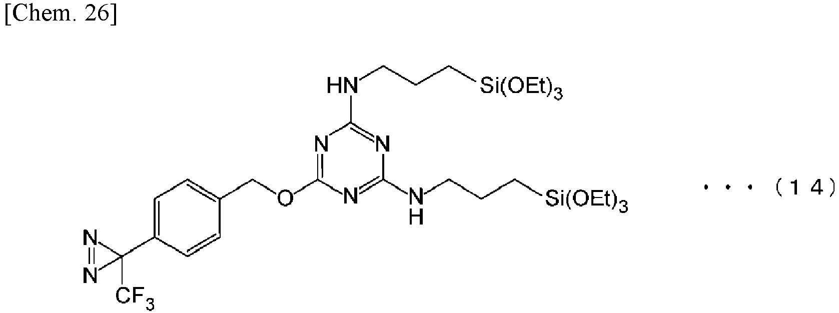

### (Action of reactivity-imparting compound)

Since the reactivity-imparting compound according to the present embodiment has a silane coupling moiety and a diazirine group which is a photoreactive nitrogen-functional group, the diazirine group is photolyzed by light (at a wavelength around 360 nm) to produce carbenes (two-carbonated carbon which has six valence electrons and no charge) which are highly reactive chemical species. These carbene moieties form covalent bonds with the surface of a base material of a layered body. After the formation of covalent bonds, the silane coupling moiety of the reactivity-imparting compound is immobilized on the surface of the base material. The silane coupling moiety forms silanol groups through hydrolysis with water contained in a solvent or the like. Accordingly, the base material can be imparted with reactivity that enables bonding with other materials (for example, a metal layer) via silanol groups.

A conventionally well-known compound which contains an azide group and a triazine ring is photolyzed to produce highly reactive chemical species (nitrenes) from the azide group moiety. Here, the reactivity-imparting compound of the present embodiment that produces carbenes can be activated by longer-wavelength light than the compound producing nitrenes derived from the azide group moiety.

In addition, the reactivity-imparting compound of the present embodiment which has a diazirine group has higher bonding strength than the conventional compound having an azide group. For example, in a case where a resin to which the reactivity-imparting compound of the present embodiment is imparted is metal-plated, the metal is less likely to peel off than with the conventional compound having an azide group. The reactivity-imparting compound of the present disclosure can be applied to resin-to resin bonding, such as bonding between silicone resins, in addition to resin-to-metal bonding. In addition, the reactivity-imparting compound of the present disclosure can also be applied to, for example, bonding between a resin and an inorganic material such as ceramics or quartz.

### (Method for producing a reactivity-imparting compound)

The reactivity-imparting compound of the present embodiment can be appropriately produced, for example, through a method for introducing a silane coupling moiety and a diazirine group into a compound with a triazine ring or a benzene ring. Here, a trihalogenated triazine ring will be described as an example, but a benzene ring can also be synthesized using a chemical reaction. The trihalogenated triazine ring refers to a triazine ring in which three hydrogen atoms are substituted with halogens. Chlorine is preferable as a substituted halogen. Examples of compounds with a trihalogenated triazine ring include cyanuric chloride, 3,5,6-trichloro-1,2,4-triazine, and 4,5,6-trichloro-1,2,3-triazine.

A method for producing a reactivity-imparting compound according to the present embodiment includes: a diazirine group-imparting step of reacting a compound containing a trihalogenated triazine ring with a compound containing a hydroxyl group and a diazirine group to obtain a diazirine group-imparted compound; and a silane coupling moiety-imparting step of reacting the diazirine group-imparted compound with a compound containing an amino group and a silane coupling moiety represented by Formula (6) below. * in Formula (6) below represents an adjacent carbon atom. Here, an example in which cyanuric chloride obtained by chlorinating 1,3,5-triazine is used as a compound with a trihalogenated triazine ring will be described, but the same reaction can be used for compounds with other trihalogenated triazine rings to obtain the reactivity-imparting compound according to the present embodiment.

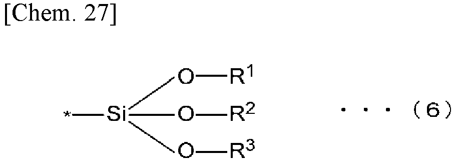

### <Diazirine group-imparting step>

In the diazirine group-imparting step, cyanuric chloride is reacted with a compound containing a hydroxyl group and a diazirine group to obtain a diazirine group-imparted compound. Examples of compounds containing a hydroxyl group and a diazirine group include 2-(3-methyl-3H-diazirin-3-yl)ethanol, 2-(3-butyl-3H-diazirin-3-yl)ethanol, 2-(3-pentyl-3H-diazirin-3-yl)ethanol, and (4-(3-(trifluoromethyl)-3H-diazirin-3-yl)phenyl)methanol.

Synthesis using 2-(3-methyl-3H-diazirin-3-yl)ethanol will be described below. In a case of imparting one diazirine group, for example, a reaction of Formula (7) below is exemplified. Base in Formula (7) below represents a base, and diisopropylethylamine, pyridine, triethylamine, and the like can be used. 2,4-Dichloro-6-(2-(3-methyl-3H-diazirin-3-yl)ethoxy)-1,3,5-triazine of Formula (15) below can be obtained through the reaction of Formula (7) below.

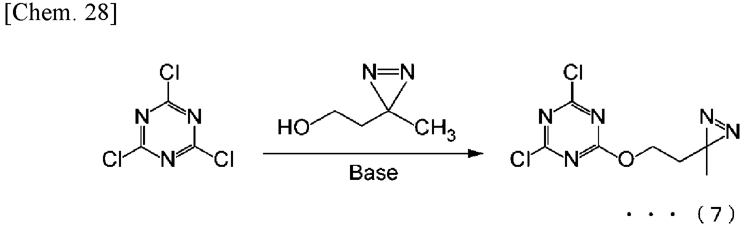

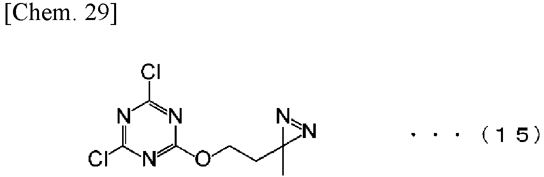

Synthesis using (4-(3-(trifluoromethyl)-3H-diazirin-3-yl)phenyl)methanol will be described below. In a case of imparting one diazirine group, for example, a reaction of Formula (16) below is exemplified. Base in Formula (16) below represents a base, and diisopropylethylamine, pyridine, triethylamine, and the like can be used. 2,4-Dichloro-6-((4-(3-(trifluoromethyl)-3H-diazirin-3-yl)benzyl)oxy)-1,3,5-triazine of Formula (17) below can be obtained through the reaction of Formula (16) below. The temperature during the reaction is, for example, room temperature (20°C to 30°C).

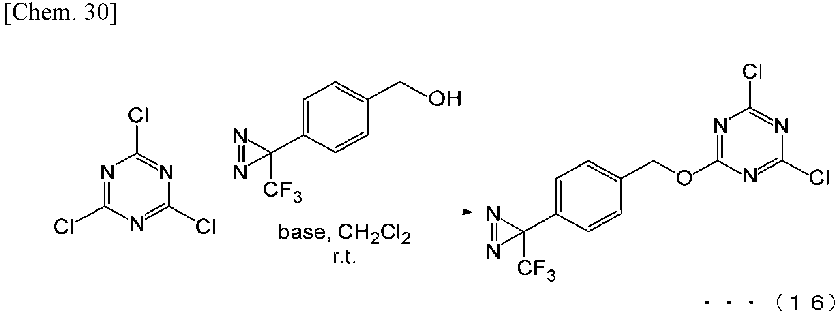

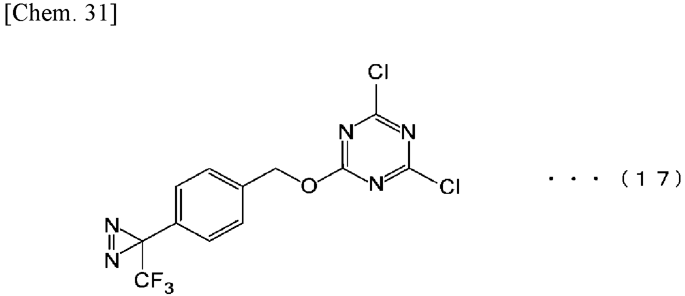

In a case of imparting two diazirine groups, for example, a reaction of Formula (8) below is exemplified. Base in Formula (8) below represents a base, and diisopropylethylamine, pyridine, triethylamine, and the like can be used. 2-Chloro-4,6-bis(2-(3-methyl-3H-diazirin-3-yl)ethoxy)-1,3,5-triazine of Formula (18) below can be obtained through the reaction of Formula (8) below. The number of diazirine groups imparted to a triazine ring can be controlled by the reaction temperature during imparting of the diazirine groups. The temperature during a reaction is set, for example, to room temperature in a case where only one diazirine group is imparted, and to 40°C to 50°C in a case where two diazirine groups are imparted. The reaction temperature can be set appropriately.

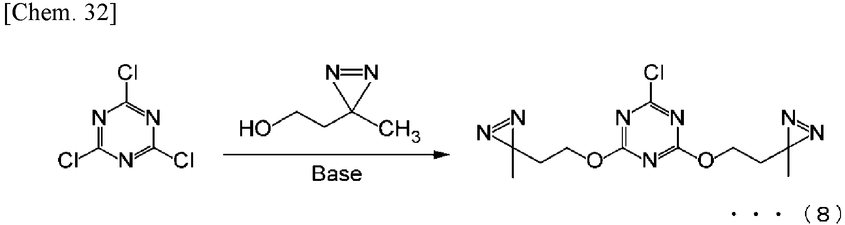

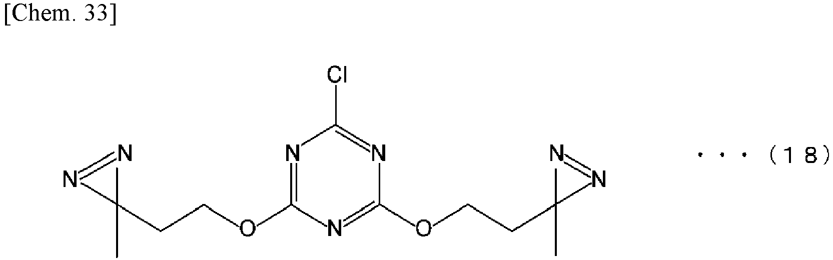

In a case where two diazirine groups are imparted using (4-(3-(trifluoromethyl)-3H-diazirin-3-yl)phenyl)methanol, the reaction is as shown in Formula (19) below. Base in Formula (19) below represents a base, and diisopropylethylamine, pyridine, triethylamine, and the like can be used. 2-Chloro-4,6-bis((4-(3-(trifluoromethyl)-3H-diazirin-3-yl)benzyl)oxy)-1,3,5-triazine of Formula (20) below can be obtained through the reaction of Formula (19) below. The number of diazirine groups imparted to a triazine ring can be controlled by the reaction temperature or the formulation proportion during imparting of the diazirine groups.

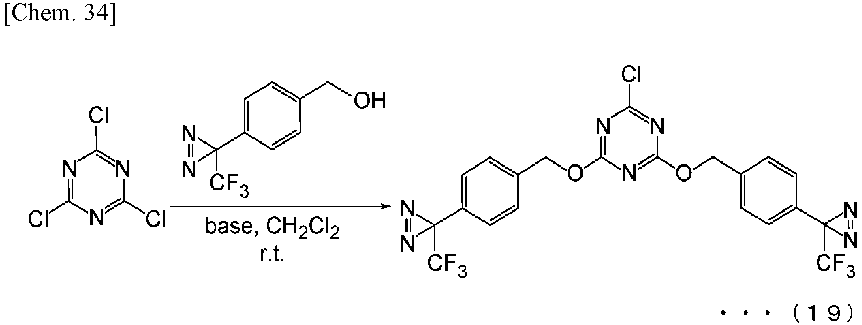

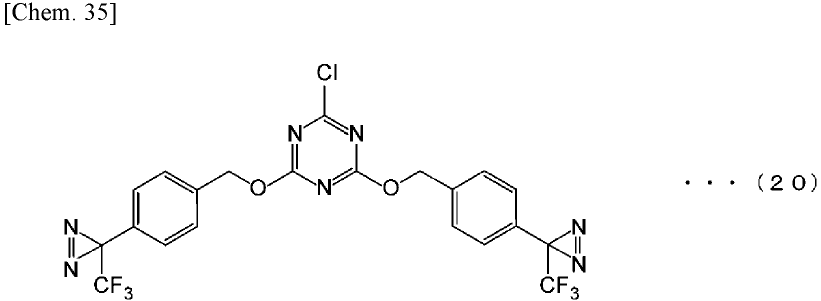

### <Silane coupling moiety-imparting step>

In the silane coupling moiety-imparting step, the diazirine group-imparted compound obtained in the above-described diazirine group-imparting step is reacted with the compound containing an amino group and a silane coupling moiety represented by Formula (6) above. The reactivity-imparting compound according to the present embodiment can be obtained through this silane coupling moiety-imparting step.

R¹, R², and R³ in the silane coupling moiety in Formula (6) above each represents a hydrogen atom or an alkyl group. R¹, R², and R³ may be the same as or different from each other. Examples of alkyl groups for R¹, R², and R³ include a methyl group, an ethyl group, a propyl group, an isopropyl group, a butyl group, and an isobutyl group. Alkyl groups for R¹, R², and R³ preferably include a methyl group and an ethyl group.

Examples of compounds containing an amino group and a silane coupling moiety represented by Formula (6) above include 3-aminopropyltriethoxysilane and 3-aminopropyltrimethoxysilane.

An example of a reaction of 2,4-dichloro-6-(2-(3-methyl-3H-diazirin-3-yl)ethoxy)-1,3,5-triazine synthesized in Formula (7) above with 3-aminopropyltriethoxysilane is shown in Formula (9) below. Base in Formula (9) below represents a base, and diisopropylethylamine, pyridine, triethylamine, and the like can be used. 6-(2-(3-Methyl-3H-diazirin-3-yl)ethoxy)-N²,N⁴-bis(3-(triethoxysilyl)propyl)-1,3,5-triazine-2,4-diamine of Formula (12) above can be obtained through the reaction of Formula (9) below.

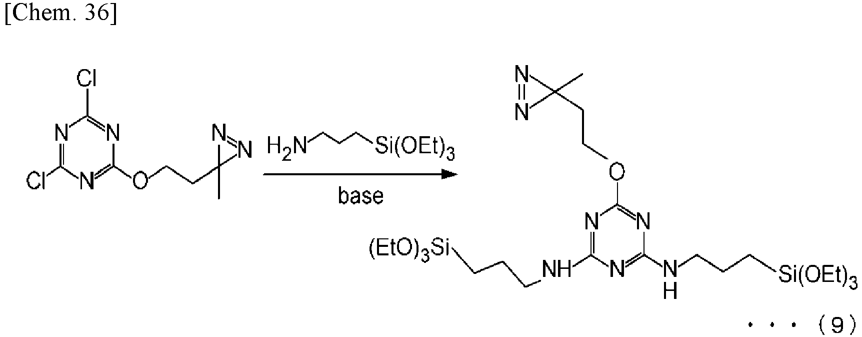

An example of a reaction of 2-chloro-4,6-bis(2-(3-methyl-3H-diazirin-3-yl)ethoxy)-1,3,5-triazine synthesized in Formula (8) above with 3-aminopropyltriethoxysilane is shown in Formula (10) below. Base in Formula (10) below represents a base, and diisopropylethylamine, pyridine, triethylamine, and the like can be used. 4,6-Bis(2-(3-methyl-3H-diazirin-3-yl)ethoxy)-N-((3-triethoxysilyl)propyl)-1,3,5-triazine-2-amine of Formula (4) above can be obtained through the reaction of Formula (10) below.

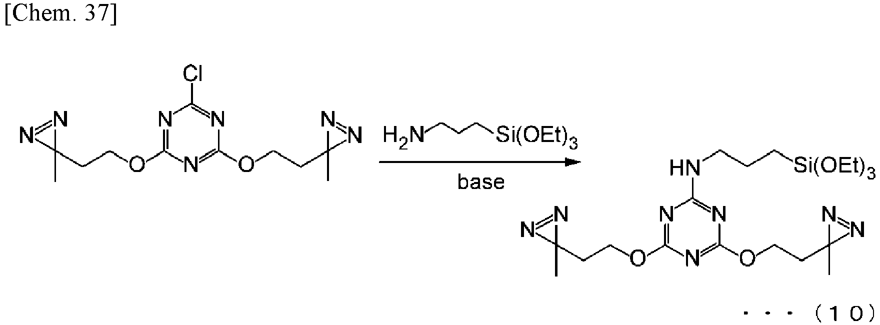

An example of a reaction of 2,4-dichloro-6-((4-(3-(trifluoromethyl)-3H-diazirin-3-yl)benzyl)oxy)-1,3,5-triazine synthesized in Formula (16) above with 3-aminopropyltriethoxysilane is shown in Formula (21) below. Base in Formula (21) below represents a base, and diisopropylethylamine, pyridine, triethylamine, and the like can be used. N²,N⁴-bis((3-triethoxysilyl)propyl)-6-((4-(3-(trifluoromethyl)-3H-diazirin-3-yl)benzyl)oxy)-1,3,5-triazine-2,4-diamine of Formula (14) above can be obtained through the reaction of Formula (21) below.

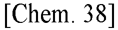

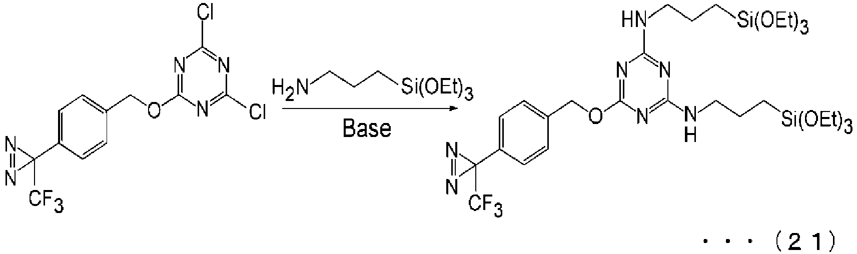

An example of a reaction of 2-chloro-4,6-bis((4-(3-(trifluoromethyl)-3H-diazirin-3-yl)benzyl)oxy)-1,3,5-triazine synthesized in Formula (19) above with 3-aminopropyltriethoxysilane is shown in Formula (22) below. Base in Formula (22) below represents a base, and diisopropylethylamine, pyridine, triethylamine, and the like can be used. N-((3-triethoxysilyl)propyl)-4,6-bis((4-(3-(trifluoromethyl)-3H-diazirin-3-yl)benzyl)oxy)-1,3,5-triazine-2-amine of Formula (13) above can be obtained through the reaction of Formula (22) below.

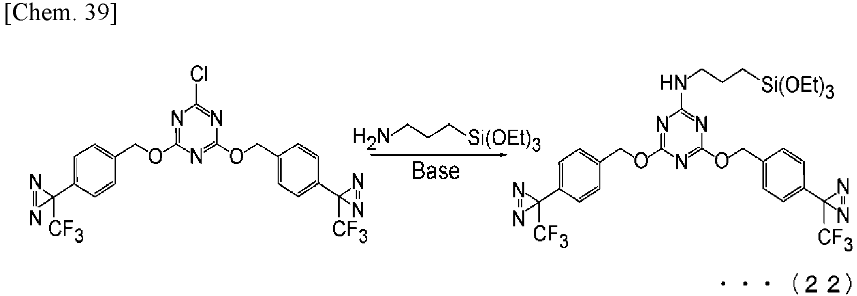

### (Layered body)

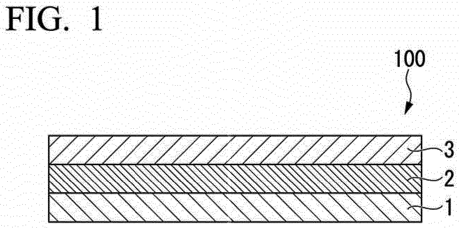

An example of a layered body in which the reactivity-imparting compound according to the present embodiment is used will be described below. As shown in FIG. 1, a layered body 100 according to the embodiment of the present invention includes a base material (first base material) 1, a reactivity-imparting compound layer 2, and a metal layer (second base material) 3. Hereinafter, each part will be described.

### (Base material)

Examples of the base material 1 include inorganic materials such as ceramics, and a resin. The form of the base material 1 is not particularly limited, and may be a plate shape or a granular shape. The base material 1 is an example of a first base material.

The resins may be curable resins (for example, a thermosetting resin, a photocurable resin, and an electron beam-curable resin), thermoplastic resins, fiber-reinforced resins, rubber (vulcanized rubber), and other materials with a coating film or the like containing such polymers on the surface. Specific examples of resins include acrylonitrile-butadiene-styrene (ABS) resin. ABS resin is used for vehicle components and the like, and is used for layered bodies having a portion where ABS and a metal are bonded together through metal plating on the surface of ABS. In addition, examples of resins for circuits include an epoxy resin, a polyimide resin, a liquid crystal polymer, a cycloolefin polymer (COP), a fluorine resin, and polyphenylene sulfide (PPS).

In a case where the layered body 100 is used as a printed wiring board, a thermal load is applied to the layered body 100, for example, through soldering of wiring. In addition, in a case where the layered body 100 is used as a movable part of an electronic product, sufficient mechanical strength is required. For this reason, a polyimide resin having excellent properties in terms of heat resistance, mechanical strength, and dimensional stability is preferable.

Examples of inorganic materials for the base material 1 include materials containing silicon oxide. In addition, electronic device components and circuit boards include a substrate containing various inorganic and organic materials, and a circuit is formed on its surface through metal plating and the like to use the formed body as a layered body.

A resin of the base material 1 may contain inorganic particles such as talc, a lubricant, an antistatic agent, and the like depending on the purpose such as improvement in mechanical strength.

In a case where the layered body 100 is used as a printed wiring board, the thickness thereof is not particularly limited. However, in a case where the base material 1 used is a flexible wiring board, the thickness of the base material 1 is preferably 1 µm to 200 µm, for example. In a case where the thickness of the base material 1 is less than 1 µm, there is a probability that the mechanical strength of the base material 1 will be insufficient, which is not preferable. The thickness of the base material 1 is more preferably 3 µm or more. In addition, if the thickness of the film exceeds 200 µm, the bendability may deteriorate, which is not preferable. The thickness of the base material 1 is more preferably 150 µm or less.

In a case where the layered body 100 is used as a printed wiring board, the arithmetic average roughness Ra of the base material 1 is, for example, 0.01 to 1 µm. If the arithmetic average roughness Ra is 0.01 µm to 1 µm, it is possible to cope with miniaturization of circuits. In addition, if the arithmetic average roughness Ra is 0.2 µm or less, the transmission loss in a high-frequency region can be reduced. The arithmetic average roughness Ra can be measured in accordance with JIS B 0601:2013.

### (Reactivity-imparting compound layer 2)

The reactivity-imparting compound layer 2 is provided on the base material 1 and is composed of the reactivity-imparting compound according to the present embodiment. Here, the expression "provided on the base material 1" means not only providing the reactivity-imparting compound layer 2 so as to be in contact with the surface of the base material 1, but also providing an intermediate layer between the base material 1 and the reactivity-imparting compound layer 2. In addition, the expression also includes partially providing the reactivity-imparting compound layer on the surface of the base material 1.

The thickness of the reactivity-imparting compound layer 2 is not particularly limited as long as the reactivity-imparting compound layer covers the entire surface of the base material 1. The thickness of the reactivity-imparting compound layer 2 may be, for example, thicker than or equal to the thickness of a single molecule of a reactivity-imparting compound constituting the reactivity-imparting compound layer 2 (thicker than or equal to a monomolecular layer). The upper limit of the thickness of the reactivity-imparting compound layer 2 is not particularly limited but is, for example, 400 nm or thinner.

### (Metal layer)

The metal layer 3 is provided on the reactivity-imparting compound layer 2. The metal layer 3 is made of silver, tin, copper, and copper alloys. In a case where the layered body 100 is a printed substrate, metals forming the metal layer 3 are preferably copper and copper alloys with high conductivity from the viewpoints of power loss and transmission loss. The metal layer is an example of a second base material.

The thickness of the metal layer is not particularly limited but is, for example, 0.1 µm to 50 µm. The thickness of the metal layer is more preferably 2 µm to 10 µm. Sufficient mechanical strength can be obtained if the thickness of the metal layer is 0.1 µm to 50 µm.

The layered body 100 according to the present embodiment has been described above. In the present embodiment, the metal layer 3 has been described as an example of the second base material, but the second base material of the present invention is not limited to the metal layer 3. For example, a resin base material made of a liquid crystal polymer, an epoxy resin, and a silicone resin may be used as the second base material instead of the metal layer. In addition, an inorganic base material made of ceramic, quartz, and the like may be used as the second base material instead of the metal layer. In addition, in the present embodiment, an example of using a metal layer as the second base material has been given. However, the shape of the second base material is not limited to the layer shape as long as the first base material is bonded to the second base material via the reactivity-imparting compound. Combinations of the first base material and the second base material of the layered body of the present disclosure may include, for example, a combination of a resin and an inorganic material such as ceramics, a combination of a resin and a metal, a combination of a metal and an inorganic material such as ceramics, and a combination of the same or different kinds of resins.

### (Method for producing layered body)

Hereinafter, a method for producing the layered body according to the present embodiment will be described, but is not limited to the following method.

When producing the layered body according to the present embodiment, the reactivity-imparting compound layer 2 consisting of the reactivity-imparting compound according to the present embodiment is first formed on the base material (first base material) 1. The method for forming the reactivity-imparting compound layer 2 is not particularly limited. For example, a solution containing a reactivity-imparting compound may be applied to the surface of the base material 1 to form the reactivity-imparting compound layer 2. Alternatively, the base material 1 may be immersed in a solution containing a reactivity-imparting compound to form the reactivity-imparting compound layer 2.

**In** a case where a solution containing a reactivity-imparting compound is used, water, an organic solvent, and the like can be appropriately selected as a solvent. Specifically, water, alcohol, ketones, aromatic hydrocarbons, esters, ethers, and the like may be used. A reactivity-imparting compound may be dispersed in a solvent without being dissolved. **In** a case where a solution is used, a solvent in the solution may be volatilized through natural drying, heating, or the like.

An amplification agent may be added to a solution containing a reactivity-imparting compound. Examples of amplification agents include: compounds, such as a silane coupling agent, contributing to other bonding; and photosensitizers such as benzophenone.

After the reactivity-imparting compound layer 2 is formed on the base material 1, energy is applied to produce carbenes from a diazirine group of the reactivity-imparting compound. By reacting these carbenes with the base material 1, high adhesion is obtained between the reactivity-imparting compound layer 2 and the base material 1.

As a means for applying energy, irradiation with light can be performed, for example. The diazirine group of the reactivity-imparting compound of the present embodiment is activated by reacting with a wide range of wavelengths. Long-wavelength light is preferable to suppress deterioration due to light. Specifically, a wavelength of 300 nm or longer is preferable, and a wavelength of 450 nm or shorter is preferable. An existing light irradiation device can be appropriately used for light irradiation. At this time, the base material 1 on which the reactivity-imparting compound layer 2 is formed may be heated before the irradiation to enhance the effect of the activation.

After applying energy to the reactivity-imparting compound layer 2 to improve adhesion between the base material 1 and the reactivity-imparting compound layer 2, a metal layer (second base material) 3 is provided. The metal layer 3 may be provided through plating or the like. As the plating method, a dry plating (vapor deposition or sputtering) technique and a wet plating technique can be appropriately selected, and both may be used in combination. When forming the metal layer 3, wet plating such as electroless plating or electroplating is preferably used to form a metal thin film. A pretreatment step for a conventionally well-known plating process can be appropriately applied before the formation of the metal layer 3. In addition, in a case of forming a resin base material, an inorganic base material, or the like on the reactivity-imparting compound layer 2 as a second base material, a well-known method can be used.

### [Examples]

Next, examples of the present invention will be described. However, the conditions in the examples are merely condition examples employed for confirming the feasibility and effect of the present invention, although the present invention is not limited to these condition examples.

### (Test conditions)

The following instruments and reagents were used to analyze synthesis of samples and synthesized samples.

### · Analytical instruments

Nuclear magnetic resonance spectrum: JEOL JNM-ECA500 NMR measurement device (500 MHz)
Mass spectrometry: JEOL JMS-700 mass spectrometer

### · Reagents

Various reagents: Commercially available reagents were used and purified through regular methods as necessary. 2-(3-Methyl-3H-diazirin-3-yl)ethanol was purchased from Amadis Chemical. (4-(3-(Trifluoromethyl)-3H-diazirin-3-yl)phenyl)methanol was purchased from Tokyo Chemical Industry Co., Ltd.

Various reaction solvents: Dried and purified through regular methods as necessary.

Silica gel: Wako-gel C-200 (Wako Pure Chemical Industries, Ltd.), Silica gel 60N (Kanto Chemical Co., Inc.)

Hereinafter, a method for synthesizing samples will be described.

### (Example 1)

A 10 mL branched flask was placed in an argon atmosphere, and dehydrated THF (1.1 mL), 2-(3-methyl-3H-diazirin-3-yl)ethanol (0.39 mL, 4.07 mmol, 2.50 eq.), and diisopropylethylamine (0.54 mL, 4.07 mmol, 2.50 eq.) were added thereto, and then cooled to 0°C. Cyanuric chloride (0.307 g, 1.63 mmol, 1.00 eq.) dissolved in dehydrated THF (0.72 mL) was added thereto, and the mixture was stirred under a light-shielded condition for 1 hour. After raising the temperature to room temperature (20°C to 30°C), the mixture was stirred under a light-shielded condition for 16 hours. After stirring, water was added, and extraction was performed with diethyl ether. After the organic layer was dried with anhydrous sodium sulfate and filtered, solvent removal and vacuum drying were performed to obtain a yellow liquid (0.654 g) as a crude product. The crude product was separated and purified through silica gel column chromatography using hexane and chloroform at 1:1 as a developing solvent to obtain 2,4-dichloro-6-(2-(3-methyl-3H-diazirin-3-yl)ethoxy)-1,3,5-triazine (0.292 g, 1.18 mmol, 72%) as a yellow liquid.

Results of nuclear magnetic resonance spectrum analysis and mass spectrometry of the obtained compound (2,4-dichloro-6-(2-(3-methyl-3H-diazirin-3-yl)ethoxy)-1,3,5-triazine) are shown below.
¹H NMR (500 MHz, CDCl₃): δ 1.14 (s, 3H, CH₃), 1.88 (t, J=6.6 Hz, 2H, CH₂), 4.43 (t, J=6.6 Hz, 2H, CH₂);
¹³C NMR (126 MHz, CDCl₃): δ 20.1, 23.7, 33.6, 65.4, 170.8, 172.7;
FAB-MS: m/z 248 [(M+H)⁺].

Next, 2,4-dichloro-6-(2-(3-methyl-3H-diazirin-3-yl)ethoxy)-1,3,5-triazine (0.500 g, 2.02 mmol, 1.00 eq.) was added to a 50 mL branched flask and placed in an argon atmosphere. Dehydrated 1,4-dioxane (10.1 mL), 3-aminopropyltriethoxysilane (0.86 mL, 3.69 mmol, 1.83 eq.), and diisopropylethylamine (0.81 mL, 4.76 mmol, 2.36 eq.) were added thereto and the temperature was raised to 65°C, and then the mixture was stirred under a light-shielded condition for 3 hours. After stirring, water was added, and extraction was performed with diethyl ether. After the organic layer was dried with anhydrous sodium sulfate and filtered, solvent removal and vacuum drying were performed to obtain a colorless liquid (1.04 g) as a crude product. The crude product was separated and purified through silica gel column chromatography using chloroform and ethyl acetate at 3:1 as a developing solvent to obtain 6-(2-(3-methyl-3H-diazirin-3-yl)ethoxy)-N²,N⁴-bis(3-(triethoxysilyl)propyl)-1,3,5-triazine-2,4-diamine (0.476 g, 0.770 mmol, 38%) of Example 1 as a colorless liquid.

Results of nuclear magnetic resonance spectrum analysis and mass spectrometry of the obtained compound (6-(2-(3-methyl-3H-diazirin-3-yl)ethoxy)-N²,N⁴-bis(3-(triethoxysilyl)propyl)-1,3,5-triazine-2,4-diamine) are shown below.
¹H NMR (500 MHz, CDCl₃): δ 0.66 (brt, 4H, CH₂), 1.09 (s, 3H, CH₃), 1.23 (t, J=6.9 Hz, 18H, CH₃), 1.67 (brs, 4H, CH₂), 1.77 (brs, 2H, CH₂), 3.33 and 3.40 (each brs, total 4H, CH₂), 3.82 (q, J=6.9Hz, 12H, CH₂), 4.13 and 4.20 (each brs, total 2H, CH₂), 5.14 and 5.24 (brs, 2H, NH);
¹³C NMR (126 MHz, CDCl₃): δ 7.75, 18.4, 20.1, 23.0, 24.1, 34.1, 43.3, 58.5, 61.4, 16.3, 170.0;
HR-FAB-MS: m/z calcd for C₂₅H₅₂N₇O₇Si₂ [(M+H)⁺]: 618.3467; Found: 618.3471.

### (Example 2)

A 10 mL branched flask was placed in an argon atmosphere, and dehydrated THF (1.1 mL), 2-(3-methyl-3H-diazirin-3-yl)ethanol (0.39 mL, 4.07 mmol, 2.50 eq.), and diisopropylethylamine (0.54 mL, 4.07 mmol, 2.50 eq.) were added thereto, and then cooled to 0°C. Cyanuric chloride (0.308 g, 1.63 mmol, 1.00 eq.) dissolved in dehydrated THF (0.72 mL) was added thereto, and the mixture was stirred under a light-shielded condition for 1 hour. After raising the temperature to 40°C, the mixture was stirred under a light-shielded condition for 17 hours. After stirring, water was added, and extraction was performed with diethyl ether. After the organic layer was dried with anhydrous sodium sulfate and filtered, solvent removal and vacuum drying were performed to obtain a yellow liquid (0.582 g) as a crude product. The crude product was separated and purified through silica gel column chromatography using hexane and chloroform at 1:1 as a developing solvent to obtain 2-chloro-4,6-bis(2-(3-methyl-3H-diazirin-3-yl)ethoxy)-1,3,5-triazine (0.227 g, 0.728 mmol, 45%) as a yellow liquid.

Results of nuclear magnetic resonance spectrum analysis and mass spectrometry of the obtained compound (2-chloro-4,6-bis(2-(3-methyl-3H-diazirin-3-yl)ethoxy)-1,3,5-triazine) are shown below.
¹H NMR (500 MHz, CDCl₃): δ 1.13 (s, 6H, CH₃), 1.85 (t, J=6.4 Hz, 4H, CH₂), 4.37 (t, J=6.4 Hz, 4H, CH₂);
¹³C NMR (126 MHz, CDCl₃): δ 20.2, 23.8, 33.8, 64.4, 171.9, 172.9;
FAB-MS: m/z 312 [(M+H)⁺].

Next, 2-chloro-4,6-bis(2-(3-methyl-3H-diazirin-3-yl)ethoxy)-1,3,5-triazine (0.396 g, 1.27 mmol, 1.00 eq.) was added to a 50 mL branched flask and placed in an argon atmosphere. Dehydrated 1,4-dioxane (8.5 mL), 3-aminopropyltriethoxysilane (0.34 mL, 1.46 mmol, 1.15 eq.), and diisopropylethylamine (0.33 mL, 1.94 mmol, 1.53 eq.) were added thereto and the temperature was raised to 65°C, and then the mixture was stirred under a light-shielded condition for 3 hours. After stirring, water was added, and extraction was performed with diethyl ether. After the organic layer was dried with anhydrous sodium sulfate and filtered, solvent removal and vacuum drying were performed to obtain a yellow liquid (0.645 g) as a crude product. The crude product was separated and purified through silica gel column chromatography using chloroform and ethyl acetate at 4:1 as a developing solvent to obtain 4,6-bis(2-(3-methyl-3H-diazirin-3-yl)ethoxy)-N-((3-triethoxysilyl)propyl)-1,3,5-triazine-2-amine (0.501 g, 1.01 mmol, 80%) of Example 2 as a yellow liquid.

Results of nuclear magnetic resonance spectrum analysis and mass spectrometry of the obtained compound (4,6-bis(2-(3-methyl-3H-diazirin-3-yl)ethoxy)-N-((3-triethoxysilyl)propyl)-1,3,5-triazine-2-amine) are shown below.
¹H NMR (500 MHz, CDCl₃): δ 0.67 (t, J=7.6 Hz, 2H, CH₂), 1.10 (s, 3H, CH₃), 1.11 (s, 3H, CH₃), 1.23 (t, J=6.9 z, 9H, CH₃), 1.71 (quint, J=7.6 z, 2H, CH₂), 1.79 (t, J=6.3 z, 2H, CH₂), 1.81 (t, J=6.3 Hz, 2H, CH₂), 3.44 (q, J=7.6 Hz, 2H, CH₂), 3.83 (q, J=6.9 Hz, 6H, CH₂), 4.22 (t, J=6.3 Hz, 2H, CH₂), 4.28 (t, J=6.3 Hz, 2H, CH₂), 5.80 (brt, 1H, NH);
¹³C NMR (126 MHz, CDCl₃): δ 7.73, 18.4, 20.12, 20.14, 22.9, 23.97, 24.01, 33.9, 43.5, 58.5, 62.3, 62.4, 168.1, 171.3, 171.9;
HR-FAB-MS: m/z calcd for C₂₀H₃₇N₈O₅Si [(M+H)⁺]: 497.2656; Found: 497.2652.

### (Example 3)

Cyanuric chloride (1.00 g, 5.42 mmol, 1.00 eq.) was added to a 50 mL branched flask and placed in an argon atmosphere. It was dissolved in dehydrated methylene chloride (9.5 mL), and then cooled to 0°C. (4-(3-(Trifluoromethyl)-3H-diazirin-3-yl)phenyl)methanol (1.17 g, 5.41 mmol, 1.00 eq.) dissolved in dehydrated methylene chloride (5.4 mL) and diisopropylethylamine (1.01 mL, 5.94 mmol, 1.10 eq.) were added thereto, and the mixture was stirred under a light-shielded condition for 1 hour. After raising the temperature to room temperature (20°C to 30°C), the mixture was stirred under a light-shielded condition for 1.5 hours. After stirring, water was added, and extraction was performed with diethyl ether. After the organic layer was dried with anhydrous sodium sulfate and filtered, solvent removal and vacuum drying were performed to obtain a yellow liquid (1.88 g) as a crude product. The crude product was separated and purified through silica gel column chromatography using hexane and chloroform at 1:4 as a developing solvent to obtain 2,4-dichloro-6-((4-(3-(trifluoromethyl)-3H-diazirin-3-yl)benzyl)oxy)-1,3,5-triazine (1.45 g, 3.98 mmol, 73%) as a yellow liquid.

Results of nuclear magnetic resonance spectrum analysis and mass spectrometry of the obtained compound (2,4-dichloro-6-((4-(3-(trifluoromethyl)-3H-diazirin-3-yl)benzyl)oxy)-1,3,5-triazine) are shown below.
¹H NMR (500 MHz, CDCl₃): δ 5.53 (s, 2H, CH₂), 7.23 (d, J=8.6 Hz, 2H, benzene-H), 7.51 (d, J=8.6 Hz, 2H, benzene-H);
¹³C NMR (126 MHz, CDCl₃): δ 28.4 (q, J=40.9 Hz), 70.7, 122.1 (q, J=275 Hz), 127.0, 128.9, 130.0, 135.5, 170.8, 172.8;
¹⁹F NMR (471 MHz, CDCl₃): δ -65.0;
HR-FAB-MS: m/z calcd for C₁₂H₇Cl₂F₃N₅O [(M+H)⁺]: 363.9980; Found: 363.9972.

Next, 2,4-dichloro-6-((4-(3-(trifluoromethyl)-3H-diazirin-3-yl)benzyl)oxy)-1,3,5-triazine (0.300 g, 0.824 mmol, 1.00 eq.) was added to a 20 mL branched flask and placed in an argon atmosphere. Dehydrated 1,4-dioxane (6.04 mL), 3-aminopropyltriethoxysilane (0.44 mL, 1.89 mmol, 2.29 eq.), and diisopropylethylamine (0.42 mL, 2.47 mmol, 3.00 eq.) were added thereto and the temperature was raised to 65°C, and then the mixture was stirred under a light-shielded condition for 3 hours. After stirring, water was added, and extraction was performed with diethyl ether. After the organic layer was dried with anhydrous sodium sulfate and filtered, solvent removal and vacuum drying were performed to obtain a yellow liquid (0.360 g) as a crude product. The crude product was separated and purified through silica gel column chromatography using chloroform and ethyl acetate at 4:1 as a developing solvent to obtain N²,N⁴-bis((3-triethoxysilyl)propyl)-6-((4-(3-(trifluoromethyl)-3H-diazirin-3-yl)benzyl)oxy)-1,3,5-triazine-2,4-diamine (0.160 g, 0.218 mmol, 26%) of Example 3 as a yellow liquid.

Results of nuclear magnetic resonance spectrum analysis and mass spectrometry of the obtained compound (N²,N⁴-bis((3-triethoxysilyl)propyl)-6-((4-(3-(trifluoromethyl)-3H-diazirin-3-yl)benzyl)oxy)-1,3,5-triazine-2,4-diamine) are shown below.
¹H NMR (500 MHz, CDCl₃): δ 0.65 and 0.66 (each brt, total 4H, CH₂), 1.22 (t, J=6.9 Hz, 18H, CH₃), 1.68 (brs, 4H, CH₂), 3.33 and 3.39 (each brs, total 4H, CH₂), 3.82 (q, J=6.9Hz, 12H, CH₂), 5.14, 5.23 and 5.29 (each brs, total 2H, NH), 5.33 (brs, 2H, CH₂), 7.16 (d, J=6.9Hz, 2H, benzene-H), 7.43-7.48 (brm, 2H, benzene-H);
¹³C NMR (126 MHz, CDCl₃): δ 7.75, 18.4, 23.0, 23.1, 28.4 (q, J=40.9 Hz), 43.4, 58.5, 66.8, 67.0, 67.2, 122.2 (q, J=275 Hz), 126.5, 127.9, 128.3, 128.4, 128.5, 138.9, 166.8, 167.3, 167.6, 170.0, 170.4;
¹⁹F NMR (471 MHz, CDCl₃): δ -65.2;

### (Example 4)

Cyanuric chloride (1.00 g, 5.42 mmol, 1.00 eq.) was added to a 50 mL branched flask and placed in an argon atmosphere. It was dissolved in dehydrated methylene chloride (9.5 mL), and then cooled to 0°C. (4-(3-(Trifluoromethyl)-3H-diazirin-3-yl)phenyl)methanol (2.42 g, 11.9 mmol, 2.20 eq.) dissolved in dehydrated methylene chloride (5.4 mL) and diisopropylethylamine (2.02 mL, 11.9 mmol, 2.20 eq.) were added thereto, and the mixture was stirred under a light-shielded condition for 1 hour. After raising the temperature to room temperature (20°C to 30°C), the mixture was stirred under a light-shielded condition for 16 hours. After stirring, water was added, and extraction was performed with diethyl ether. After the organic layer was dried with anhydrous sodium sulfate and filtered, solvent removal and vacuum drying were performed to obtain a yellow solid (3.32 g) as a crude product. The crude product was separated and purified through silica gel column chromatography using hexane and chloroform at 1:4 as a developing solvent to obtain 2-chloro-4,6-bis((4-(3-(trifluoromethyl)-3H-diazirin-3-yl)benzyl)oxy)-1,3,5-triazine (2.46 g, 4.52 mmol, 83%) as a white solid.

Results of nuclear magnetic resonance spectrum analysis and mass spectrometry of the obtained compound (2-chloro-4,6-bis((4-(3-(trifluoromethyl)-3H-diazirin-3-yl)benzyl)oxy)-1,3,5-triazine) are shown below.
¹H NMR (500 MHz, CDCl₃): δ 5.47 (s, 4H, CH₂), 7.21 (d, J=8.4 Hz, 4H, benzene-H), 7.47 (d, J=8.4 Hz, 4H, benzene-H);
¹³C NMR (126 MHz, CDCl₃): δ 28.4 (q, J=40.9 Hz), 69.8, 122.1 (q, J=275 Hz), 126.9, 128.7, 129.7, 136.3, 172.0, 173.0;
¹⁹F NMR (471 MHz, CDCl₃): δ -65.0.
HR-FAB-MS: m/z calcd for C₂₁H₁₃ClF₆N₇O₂ [(M+H)⁺]: 544.0723; Found: 544.0722.

Next, 2-chloro-4,6-bis((4-(3-(trifluoromethyl)-3H-diazirin-3-yl)benzyl)oxy)-1,3,5-triazine (0.266 g, 0.489 mmol, 1.00 eq.) was added to a 20 mL branched flask and placed in an argon atmosphere. Dehydrated 1,4-dioxane (5.35 mL), 3-aminopropyltriethoxysilane (0.12 mL, 0.515 mmol, 1.05 eq.), and diisopropylethylamine (0.12 mL, 0.706 mmol, 1.44 eq.) were added thereto and the temperature was raised to 65°C, and then the mixture was stirred under a light-shielded condition for 3 hours. After stirring, water was added, and extraction was performed with diethyl ether. After the organic layer was dried with anhydrous sodium sulfate and filtered, solvent removal and vacuum drying were performed to obtain a yellow liquid (0.339 g) as a crude product. The crude product was separated and purified through silica gel column chromatography using chloroform and ethyl acetate at 4:1 as a developing solvent to obtain N-((3-triethoxysilyl)propyl)-4,6-bis((4-(3-(trifluoromethyl)-3H-diazirin-3-yl)benzyl)oxy)-1,3,5-triazine-2-amine (0.243 g, 0.333 mmol, 68%) as a yellow liquid.

Results of nuclear magnetic resonance spectrum analysis and mass spectrometry of the obtained compound (N-((3-triethoxysilyl)propyl)-4,6-bis((4-(3-(trifluoromethyl)-3H-diazirin-3-yl)benzyl)oxy)-1,3,5-triazine-2-amine) are shown below.
¹H NMR (500 MHz, CDCl₃): δ 0.64 (t, J=7.5 Hz, 2H, CH₂), 1.22 (t, J=6.9 Hz, 9H, CH₃), 1.69 (quint, J=7.5Hz, 2H, CH₂), 3.41 (q, J=7.5Hz, 2H, CH₂), 3.82 (q, J=6.9Hz, 6H, CH₂), 5.36 (s, 2H, CH₂), 5.39 (s, 2H, CH₂), 5.91 (t, J=7.5 Hz, 1H, NH), 7.18 (d, J=7.9 Hz, 4H, benzene-H), 7.43 (d, J=7.9 Hz, 2H, benzene-H), 7.46 (d, J=7.9 Hz, 2H, benzene-H);
¹³C NMR (126 MHz, CDCl₃): δ 7.73, 18.4, 22.8, 28.4 (q, J=40.9 Hz), 43.5, 58.6, 67.8, 68.1, 122.1 (q, J=275 Hz), 126.6, 128.2, 128.5, 128.9, 129.0, 138.0, 168.1, 171.3, 171.9;
¹⁹F NMR (471 MHz, CDCl₃): δ -65.1.

### (Reference Example 1)

2,4-Dichloro-6-(2-(3-methyl-3H-diazirin-3-yl)ethoxy)-1,3,5-triazine (0.110 g, 0.443 mmol, 1.00 eq.) was added to a 10 mL branched flask and placed in an argon atmosphere. Dehydrated 1,4-dioxane (2.21 mL), propylamine (0.08 mL, 0.974 mmol, 2.20 eq.), and diisopropylethylamine (0.23 mL, 1.35 mmol, 3.05 eq.) were added thereto and the temperature was raised to 65°C, and then the mixture was stirred under a light-shielded condition for 3 hours. After stirring, water was added, and extraction was performed with diethyl ether. After the organic layer was dried with anhydrous sodium sulfate and filtered, solvent removal and vacuum drying were performed to obtain a white solid (0.152 g) as a crude product. The crude product was separated and purified through silica gel column chromatography using chloroform as a developing solvent to obtain 6-(2-(3-methyl-3H-diazirin-3-yl)ethoxy)-N²,N⁴-dipropyl-1,3,5-triazine-2,4-diamine (0.130 g, 0.443 mmol, 100%) as a white solid.

Results of nuclear magnetic resonance spectrum analysis and mass spectrometry of the obtained compound (6-(2-(3-methyl-3H-diazirin-3-yl)ethoxy)-N²,N⁴-dipropyl-1,3,5-triazine-2,4-diamine) are shown below.
¹H NMR (500 MHz, CDCl₃): δ 0.95 (t,J=7.2 Hz, 6H, CH₃), 1.09 (s, 3H, CH₃), 1.58 (br sext, 4H, CH₂), 1.74 and 1.78 (br t and br s, total 2H, CH₂), 3.30 and 3.36 (each br s, total 4H, CH₂), 4.13 and 5.07 (each br s, total 2H, NH);
¹³C NMR (126 MHz, CDCl₃): δ 11.5, 20.2, 23.0, 24.1, 34.1, 42.7, 61.3, 61.4, 166.9, 167.3, 170.3;
HR-FAB-MS: m/z calcd for C₁₃H₂₄N₇O [(M+H)⁺]: 294.2042; Found: 294.2044.

### (Reference Example 2)

2-Chloro-4,6-bis(2-(3-methyl-3H-diazirin-3-yl)ethoxy)-1,3,5-triazine (0.280 g, 0.898 mmol, 1.00 eq.) was added to a 20 mL branched flask and placed in an argon atmosphere. Dehydrated 1,4-dioxane (5.58 mL), propylamine (0.09 mL, 1.10 mmol, 1.22 eq.), and diisopropylethylamine (0.23 mL, 1.35 mmol, 1.50 eq.) were added thereto and the temperature was raised to 65°C, and then the mixture was stirred under a light-shielded condition for 3 hours. After stirring, water was added, and extraction was performed with diethyl ether. After the organic layer was dried with anhydrous sodium sulfate and filtered, solvent removal and vacuum drying were performed to obtain a white solid (0.300 g) as a crude product. The crude product was separated and purified through silica gel column chromatography using chloroform as a developing solvent to obtain 4,6-bis(2-(3-methyl-3H-diazirin-3-yl)ethoxy)-N-propyl-1,3,5-triazine-2-amine (0.291 g, 0.870 mmol, 97%) as a white solid.

Results of nuclear magnetic resonance spectrum analysis and mass spectrometry of the obtained compound (4,6-bis(2-(3-methyl-3H-diazirin-3-yl)ethoxy)-N-propyl-1,3,5-triazine-2-amine) are shown below.
¹H NMR (500 MHz, CDCl₃): δ 0.96 (t, J=7.2 Hz, 2H, CH₃), 1.10 (s, 3H, CH₃), 1.11 (s, 3H, CH₃), 1.61 (sext, J=7.2 Hz, 2H, CH₂), 1.79 (t, J=6.6Hz, 2H, CH₂), 1.82 (t, J=6.9Hz, 2H, CH₂), 3.40 (q, J=7.2 Hz, 2H, CH₂), 4.23 (t, J=6.6 Hz, 2H, CH₂), 4.29 (t, J=6.9 Hz, 2H, CH₂), 5.65 (br s, 1H, NH);
¹³C NMR (126 MHz, CDCl₃): δ 11.4, 20.2, 22.8, 24.0, 24.1, 34.0, 42.9, 62.3, 62.5, 168.2, 171.3, 171.9;
HR-FAB-MS: m/z calcd for C₁₄H₂₃N₈O₂ [(M+H)⁺]: 335.1944; Found: 335.1948.

### (Comparative Example 1)

A stirrer and cyanuric chloride (1.00 g, 5.42 mmol) were added to a 50 mL three-neck flask, and then, THF (6 mL) and acetonitrile (6 mL) were added thereto and cooled to -10°C. After trimethylsilyldiazomethane (a 2.0 M hexane solution, 3.0 mL, 6.0 mmol) was added thereto, the mixture was heated to room temperature (20°C to 30°C) and stirred for 6 hours. After the completion of stirring, water was added thereto, and the mixed solution was extracted with diethyl ether. After the organic layer was dried with anhydrous sodium sulfate and filtered, the filtrate was concentrated with a rotary evaporator and dried under reduced pressure to obtain a crude product of a brown solid. This crude product was separated and purified through silica gel chromatography using chloroform and hexane at 4:1 as a developing solvent to obtain 2,4-dichloro-6-(diazomethyl)-1,3,5-triazine (0.689 g, 3.63 mmol, 67%) as a yellow solid.

Next, a stirrer and 2,4-dichloro-6-(diazomethyl)-1,3,5-triazine (0.758 g, 3.99 mmol) were added to a 50 mL three-neck flask and placed in an argon atmosphere, and then, dry 1,4-dioxane (25 mL) was added thereto. After triethylamine (1.66 mL, 12.0 mmol) was added thereto, 3-aminopropyltriethoxysilane (2.14 mL, 9.18 mmol) was added thereto, and the mixture was stirred at 65°C for 3 hours. After the completion of stirring, water was added thereto, and the mixed solution was extracted with diethyl ether. After the organic layer was dried with anhydrous sodium sulfate and filtered, the filtrate was concentrated with a rotary evaporator and dried under reduced pressure to obtain a crude product of a yellow viscous oil. This crude product was separated and purified through silica gel column chromatography using chloroform as a developing solvent to obtain 2,4-bis[(3-triethoxysilylpropyl)amino]-6-diazomethyl-1,3,5-triazine (1.661 g, 2.97 mmol, 74%), which is a reactivity-imparting compound, as a yellow viscous oil.

Results of nuclear magnetic resonance spectrum analysis and mass spectrometry of the obtained compound (2,4-bis[(3-triethoxysilylpropyl)amino]-6-diazomethyl-1,3,5-triazine) are shown below.
¹H NMR (400 MHz, CDCl₃): δ 0.66 (t, J=8.4 Hz, 4H, CH₂), 1.27 (t, J=7.0 Hz, 18H, CH₃), 1.67 (br s, 4H, CH₂), 3.36 (br s, 4H, CH₂), 3.82 (q, J=7.0 Hz, 12H, CH₂), 4.83-5.24 (m, 2H, NH), 5.44 (br s, 1H, CH)
¹³C NMR (101 MHz, CDCl₃): δ 7.7, 18.3, 23.0, 43.1, 51.5, 58.4, 146.8, 165.1;
FAB-MS: m/z [(M+H)⁺]: 560.3048

### (UV-Vis absorption spectrum simulation)

The following theoretical calculation program was used for simulation of a UV-Vis absorption spectrum of a reactivity-imparting compound.

### · Theoretical calculation program: Gaussian 16, Revision C.01

UV-Vis absorption spectrum simulation method: A model compound in which a triethoxysilylpropylamino group of the reactivity-imparting compound of Formula (4) above was simplified to a methylamino group (a model compound in which a triethoxysilylpropylamino group of this Example 2 was substituted with a methylamino group) was molecularly modeled, and the molecular structure was optimized through density functional (DFT) calculations. B3LYP was used as a functional for a DFT calculation, and 6-31G(d) was used as a basis function. Time-dependent density functional (TD-DFT) calculations were performed using the obtained optimum structure of the model compound to obtain UV-Vis absorption spectrum simulation results. B3LYP was used as a functional for a TD-DFT calculation, and 6-31+G(d, p) was used as a basis function.

### (UV-Vis absorption spectrum)

In addition, the following instruments and reagents were used for the analysis of the obtained Examples 1 to 4 and Comparative Example 1.
· Measurement instrument UV-Vis absorption spectrum: JASCO V-670
· Sample solution: Each compound of Examples 1 and 2 and Comparative Example 1 was weighed into a 50 mL volumetric flask, which had been washed with acetone and then dried, so that the sample concentration was 50 µmol dm⁻³ or 2 mmol dm⁻³, and diluted with dehydrated ethanol. Dehydrated ethanol was chosen because it prevents hydrolysis of the ethoxysilane moieties present in the compounds.
· Measurement: Each sample solution was placed in a quartz glass cell (1 cm), which had been washed with acetone and dried, to perform measurement under the following conditions.

UV-Vis absorption spectrum measurement conditions: bandwidth of 2 nm, scanning speed of 200 nm/min, response of Fast, and data acquisition interval of 1 nm

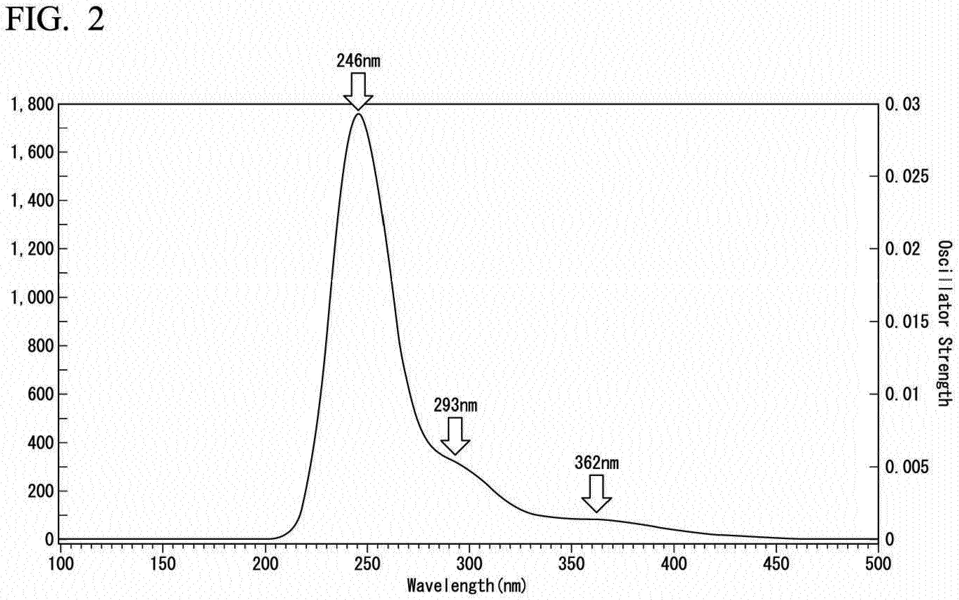

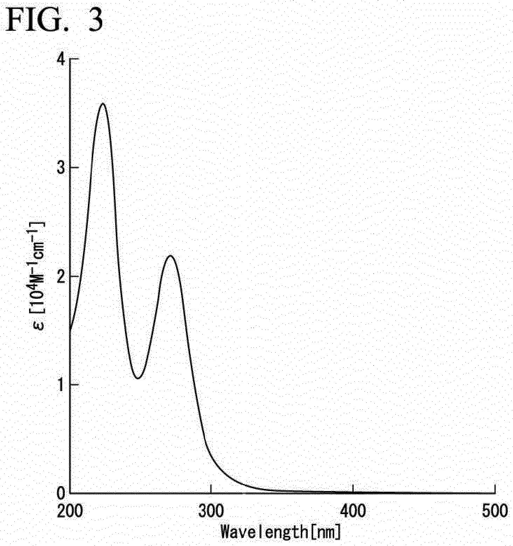

FIG. 2 shows an absorption spectrum obtained by the simulation. FIG. 3 shows an observed spectrum of Comparative Example 1. As shown in FIGS. 2 and 3, absorption derived from an n-π* transition of a diazirine group could be observed around 360 nm in a case of the model compound with the diazirine group, but absorption could not be observed around 360 nm in a case of Comparative Example 1 with a diazomethyl group. Therefore, according to the simulation of Example 2, carbenes can be produced by longer-wavelength light than the diazomethyl group of Comparative Example 1, so that photodegradation can be suppressed using the reactivity-imparting compound of the present disclosure.

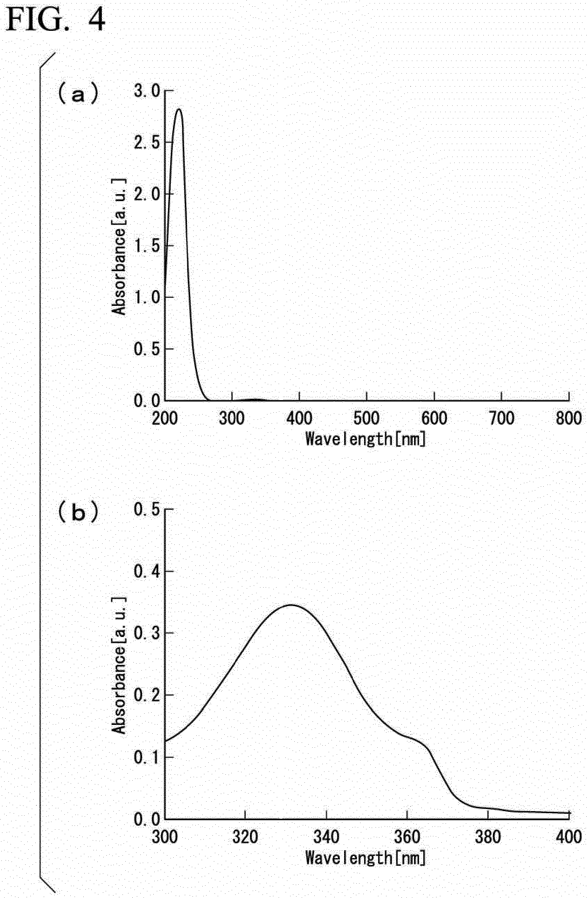

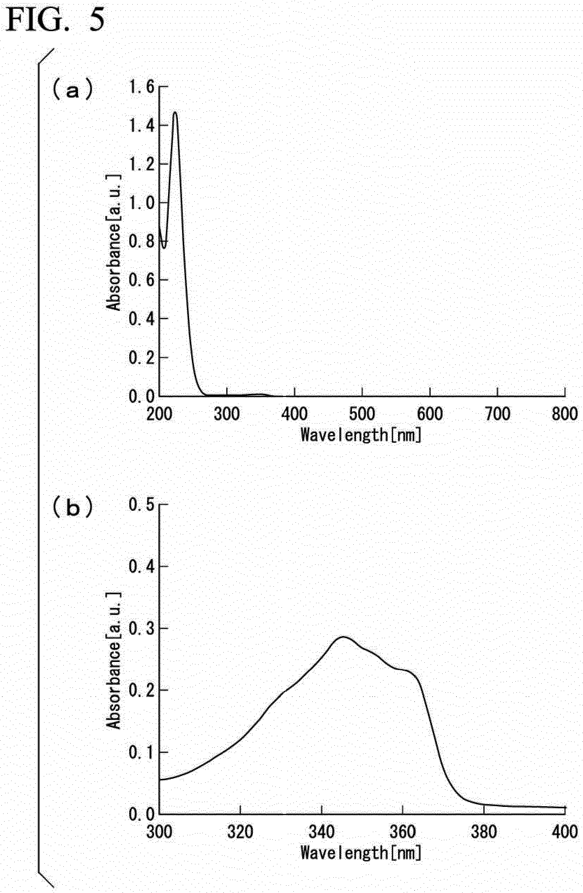

FIG. 4 shows absorption spectra of Example 1. FIG. 4(a) is an absorption spectrum at a sample concentration of 50 µmol dm⁻³, and FIG. 4(b) is an absorption spectrum at a sample concentration of 2 mmol dm⁻³. In addition, FIG. 5 shows absorption spectra of Example 2. FIG. 5(a) is an absorption spectrum at a sample concentration of 50 µmol dm⁻³, and FIG. 5(b) is an absorption spectrum at a sample concentration of 2 mmol dm⁻³. Measurement results are summarized in Table 1 below. In Table 1, λ^{abs} means a light absorption wavelength (nm) and ε means a molar extinction coefficient (dm³mol⁻¹cm⁻¹). The horizontal axis of FIGS. 4(a) and 4(b) is wavelength (nm), and the vertical axis is absorbance (arbitrary unit). The horizontal axis of FIGS. 5(a) and 5(b) is wavelength (nm), and the vertical axis is absorbance (arbitrary unit). As shown in FIGS. 4(b) and 5(b), two absorption bands were observed in the ultraviolet region of 400 nm or less in both Examples 1 and 2. When analyzed in light of the simulation results, the absorption bands observed around 360 nm can be attributed to the absorption derived from the n-π* transition of the diazirine group, that is, the absorption that induces photolysis to carbenes. This proved that Examples 1 and 2 with diazirine groups can produce carbenes through long-wavelength ultraviolet light (UVA) irradiation and can react with the surface of a base material while suppressing photodegradation. Similarly, a light absorption peak was observed around 357 nm for Examples 3 and 4.

**[Table 1]**

| | λ^{Abs.} [nm] | ε [dm³mol⁻¹cm⁻¹] |
|---|---|---|
| Example 1 | 221 | 5.65×10⁴ |
| | 331 | 1.72×10² |
| Example 2 | 223 | 2.93×10⁴ |
| | 345 | 1.42×10² |

### (Photolysis Confirmation Experiment 1 of diazirine unit)

Next, an experiment was conducted to confirm whether or not the diazirine groups of Examples 1 and 2 decompose into carbenes through irradiation with long-wavelength ultraviolet light (UVA) (wavelength of 365 nm). A silane coupling moiety of 6-(2-(3-Methyl-3H-diazirin-3-yl)ethoxy)-N²,N⁴-bis(3-(triethoxysilyl)propyl)-1,3,5-triazine-2,4-diamine of Example 1 is hydrolyzed, so 6-(2-(3-methyl-3H-diazirin-3-yl)ethoxy)-N²,N⁴-dipropyl-1,3,5-triazine-2,4-diamine of Reference Example 1 which has no silane coupling moiety and is easy to handle was used to conduct the confirmation experiment. Similarly, 4,6-bis(2-(3-methyl-3H-diazirin-3-yl)ethoxy)-N-propyl-1,3,5-triazine-2-amine of Reference Example 2 was used instead of 4,6-bis(2-(3-methyl-3H-diazirin-3-yl)ethoxy)-N-((3-triethoxysilyl)propyl)-1,3,5-triazine-2-amine of Example 2 to conduct the confirmation experiment. The measurement conditions are as follows.
· Measurement instrument UV-Vis absorption spectrum: JASCO V-670
· Sample solution: The compound of Reference Example 1 was weighed into a 50 mL volumetric flask, which had been washed with acetone and then dried, so that the sample concentration was 4 mmol dm⁻³, and diluted with dehydrated methanol. In addition, the compound of Reference Example 2 was weighed into a 50 mL volumetric flask, which had been washed with acetone and then dried, so that the sample concentration was 2 mmol dm⁻³, and diluted with dehydrated methanol.
· Measurement: Each sample solution was placed in a quartz glass cell (1 cm), which had been washed with acetone and dried, to perform measurement under the following conditions.
UV-Vis absorption spectrum measurement conditions: bandwidth of 2 nm, scanning speed of 200 nm/min, response of Fast, and data acquisition interval of 1 nm
· Light source: AS ONE Handy UV Lamp (for both 254 nm and 365 nm)
· Light irradiation conditions: wavelength of 365 nm, time of 0 to 40 min

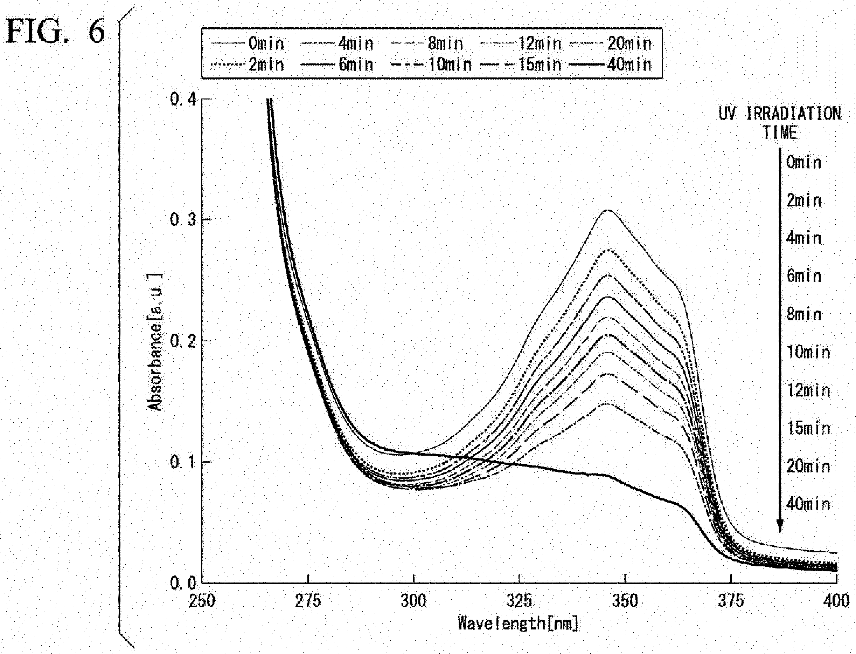

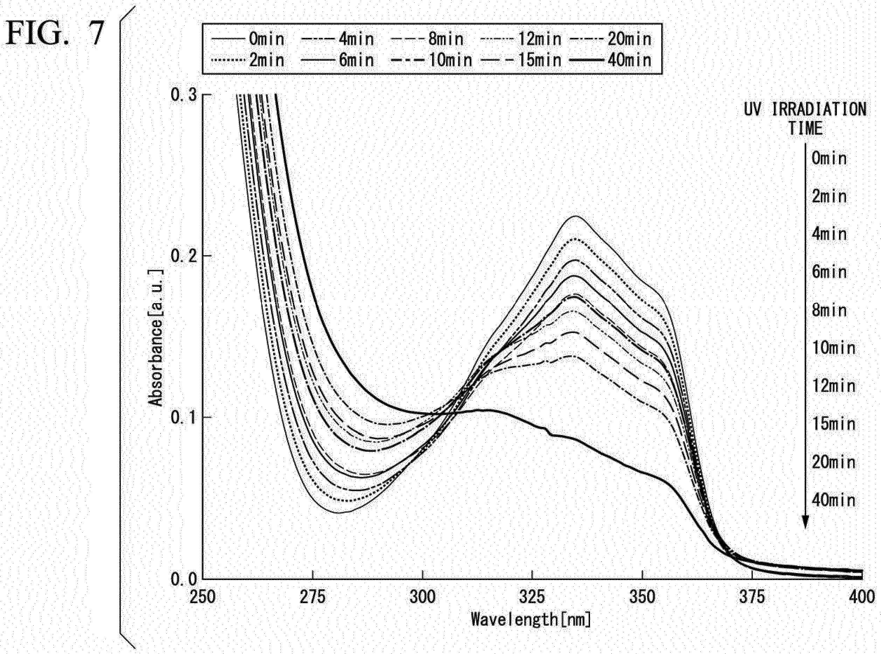

FIG. 6 shows changes in absorption spectrum of the sample solution of Reference Example 1 when irradiated with light. FIG. 7 shows changes in absorption spectrum of the sample solution of Reference Example 2 when irradiated with light. The horizontal axis is wavelength, and the vertical axis is absorbance (arbitrary unit). As shown in FIGS. 6 and 7, it was found that the longer the irradiation time, the smaller the peak (around 360 nm) derived from the n-π* transition of the diazirine group. This indicates that the diazirine group was photolyzed to carbenes through light irradiation. Accordingly, it was confirmed that the diazirine group can decompose into carbenes through light irradiation at a wavelength of 365 nm.

### (Photolysis Confirmation Experiment 2 of diazirine unit)

To corroborate that carbenes are produced through photolysis of the diazirine group, Reference Examples 1 and 2 were each dissolved in methanol, and photoreaction products were investigated through mass spectrometry of the solutions before and after irradiation with 365 nm ultraviolet light for 10 minutes. The measurement conditions are as follows.
· Measurement instrument: JEOL JMS-700 mass spectrometer
· Sample solution: 6 mg of a sample was weighed into a sample bottle, and 3 mL of dehydrated methanol was added thereto to obtain a sample solution.
· Light source: AS ONE Handy UV Lamp (for both 254 nm and 365 nm)
· Measurement: A part of the prepared sample solution was placed in a sample bottle without any operation, and this was used as a sample before ultraviolet irradiation. A part of the remaining adjusted solution was placed in a quartz cell, and the quartz cell was then irradiated with 365 nm ultraviolet light for 10 minutes with a handy UV lamp, and the solution was then placed in a sample bottle, which was used as a sample after ultraviolet irradiation. These were analyzed through mass spectrometry.

In the mass spectrum of the sample solution of Reference Example 1 before ultraviolet irradiation (ionization method: electron ionization), a molecular ion (M⁺) peak at m/z 293 which was consistent with the molecular weight of Reference Example 1 was detected. On the other hand, in the mass spectrum of the sample solution after ultraviolet irradiation, a molecular ion (M+) peak at m/z 297 derived from a photoreaction product which was not detected before irradiation was detected. This peak corresponds to a molecular weight of 297 of 6-(3-methoxybutoxy)-N²,N⁴-dipropyl-1,3,5-triazine-2,4-diamine, which was formed through an OH insertion reaction of carbenes produced through photolysis of the diazirine group with respect to hydroxyl groups (OH groups) of methanol. In the mass spectrum of the sample solution of Reference Example 2 before ultraviolet irradiation (ionization method: fast atom impact ionization), a molecular ion peak at m/z 335 was detected. If m/z 335 is considered to be a protonated molecular ion species, the mass of this peak is 334, which is consistent with a molecular weight of 334 in Reference Example 2. In the mass spectrum of the sample solution of Reference Example 2 after ultraviolet irradiation, a molecular ion peak at m/z 343 was detected. If m/z 343 is considered to be a protonated molecular ion species, the mass of this peak is 342, which is consistent with a molecular weight of 342 of 4,6-bis(3-methoxybutoxy)-N-propyl-1,3,5-triazine-2-amine formed through an OH insertion reaction of carbenes produced through photolysis of two diazirine groups in the molecular structure with respect to hydroxyl groups (OH groups) of methanol. As a photoreaction product, the product of the insertion reaction of the carbenes with respect to the OH bond of the alcohol was detected, and this result corroborated that the diazirine groups can be decomposed into carbenes through light irradiation at a wavelength of 365 nm.

### (Preparation of layered body using reactivity-imparting compound and peel strength evaluation)

Next, layered bodies were produced using the reactivity-imparting compounds of Examples 1, 2, and 4, and their peel strength evaluation (adhesion evaluation) was performed. Evaluation samples were prepared through the following procedure.

### "Pre-dip solution"

4.25 g of Cataprep 404A manufactured by Rohm and Haas Electronic Materials and 13.2 g of NaCl were added to 50 mL of distilled water while performing ultrasonic agitation for 10 minutes to prepare a pre-dip solution.

### "Catalyst solution"

12.5 g of Cataprep 404 manufactured by Rohm and Haas Electronic Materials was added to 50 mL of distilled water while performing ultrasonic agitation for 10 minutes. After Cataprep 404 was completely dissolved, 1.5 mL of Cataposit 44 manufactured by Rohm and Haas Electronic Materials was added thereto to prepare a catalyst solution.

### "Accelerator solution"

2.5 g of Accelerator 19E manufactured by Rohm and Haas Electronic Materials was added to 47.5 mL of distilled water while performing ultrasonic agitation for 10 minutes to prepare a accelerator solution.

### "Electroless plating solution"

2.5 mL of Ad-copper IW-A manufactured by Okuno Chemical Industries Co., Ltd., 0.75 mL of Ad-copper C manufactured by Okuno Chemical Industries Co., Ltd., 4 mL of Ad-copper manufactured by Okuno Chemical Industries Co., Ltd., and 0.15 mL of Electroless Copper R-N manufactured by Okuno Chemical Industries Co., Ltd. were added to 42.6 mL of distilled water while performing ultrasonic agitation for 10 minutes to prepare an electroless plating solution.

An ABS substrate (1 mm × 30 mm × 130 µm thick) manufactured by Mitsubishi Chemical Corporation was used as an acrylonitrile-butadiene-styrene resin substrate (ABS substrate). The ABS substrate was immersed in ethanol, irradiated with ultrasonic waves for 10 minutes, washed, and dried. After drying, a corona discharge device (Corona Master manufactured by Shinko Electric & Instrumentation Co., Ltd., voltage output of 12 kV, irradiation distance of 0.5 mm) was used to perform corona treatment three times on the surface of the ABS substrate. Thereafter, the ABS substrate was immersed in an ethanol solution (concentration of 0.1 wt%) of Example 1 or 2 for 10 seconds and dried to form a reactivity-imparting compound layer. Regarding Example 4, layered bodies were produced without and with corona discharge treatment.

The ABS substrate after the reactivity-imparting compound layer was formed was irradiated with light using a high-pressure mercury lamp or an LED lamp. Both the high-pressure mercury lamp and the LED had a dominant wavelength of light of 365 nm and respectively had illuminances of 17 mW/cm² and 396 mW/cm² according to the measurement results of an ultraviolet integrated illuminometer UVPF-A2 (peak sensitivity of 355 nm). The irradiation time was 5 minutes. After light irradiation, the ABS substrate was immersed in the pre-dip solution for 1 minute, immersed in the catalyst solution at 50°C for 1 minute without washing after the immersion, and then washed with distilled water. Thereafter, the ABS substrate was immersed in the accelerator solution for 3 minutes without drying it, and washed with distilled water. After washing, the ABS substrate was immersed in the electroless copper plating solution at 32°C for 15 minutes while still wet, washed with distilled water and ethanol, and dried. After drying, the ABS substrate (layered body) on which the copper layer was formed was annealed at 80°C for 10 minutes. After annealing, it was cooled to room temperature. After cooling, the annealed layered body was immersed in a copper sulfate electrolytic copper plating solution, copper-plated at a voltage of 15 V, a current density of 0.02 A/cm² for 60 minutes, washed with distilled water, dried, and annealed at 80°C for 10 minutes to obtain a layered body using a reactivity-imparting compound of each example.

### "Peel strength measurement"

A 1 cm wide cut was made in the copper layer portion of the layered body with the reactivity-imparting compounds of Examples 1 and 2, and the peel strength between the copper layer and ABS substrate was measured using an adhesion tester (Imada Force Measurement Model mX2 manufactured by Imada Inc.) under the conditions of a tensile speed of 50 mm/min and a tensile angle of 90°. The obtained results are shown in Table 2. In addition, results of the presence or absence of corona discharge treatment in Example 4 are shown in Table 3.

**[Table 2]**

| UV lamp [main wavelength: 365 nm] | UV irradiation time [min.] | Peel strength [kN/m] | |
|---|---|---|---|
| | | Example 1 | Example 2 |
| High-pressure mercury lamp | 5 | 0.92 | 1.00 |
| LED lamp | 5 | 0.45 | 0.77 |

**[Table 3]**

| UV lamp [main wavelength: 365 nm] | UV irradiation time [min.] | Peel strength [kN/m] | |
|---|---|---|---|
| | | Example 4 (without corona treatment) | Example 4 (with corona treatment) |
| High-pressure mercury lamp | 5 | 1.20 | 1.01 |
| LED lamp | 5 | 1.19 | 1.22 |

As shown in Table 2, in a case where irradiation with ultraviolet light was performed using a high-pressure mercury lamp, both layered bodies using Examples 1 and 2 as reactivity-imparting compounds also exhibited a high peel strength. It is thought that carbenes produced in Example 1 or 2 underwent an OH insertion reaction with respect to hydroxyl groups (OH groups) on the substrate surface produced through corona discharge, leading to formation of a covalent bond between the reactivity-imparting compound and the substrate surface, which resulted in high adhesion.

In addition, since the number of hydroxyl groups introduced on the substrate surface through corona discharge is small, it is difficult to obtain high adhesion as it is. However, it was confirmed that adhesion can be improved through bonding the reactivity-imparting compounds of Examples 1 and 2 to the substrate surface via photoreaction of diazirine groups to impart silanol-generating groups and forming a bond between silanol and the copper layer. In a case of using an LED lamp, the layered body using Example 2 having two diazirine groups in the molecule exhibited a higher peel strength than the layered body using Example 1 having one diazirine group in the molecule. In addition, a higher peel strength was exhibited with a mercury lamp than with the LED lamp. When a high-pressure mercury lamp having a broad spectrum in the ultraviolet region with a main wavelength of 365 nm is used, carbenes are likely to be generated and the photoreaction efficiency between the reactivity-imparting compound and the substrate is high, so high plating adhesion can be obtained regardless of the number of diazirine groups in the molecule and regardless of which reactivity-imparting compound is used. On the other hand, in a case of using an LED lamp with a narrow spectrum centered at 365 nm, carbenes are less likely to occur, and the photoreaction efficiency between the reactivity-imparting compound and the substrate is low. Therefore, high adhesion can be obtained by using Example 2 which has more diazirine groups and a higher reaction probability with the substrate.

On the other hand, as shown in Table 3, in a case where the reactivity-imparting compound of Example 4 was used, the same level of peel strength was exhibited regardless of whether a high-pressure mercury lamp or an LED lamp was used as a photoreactive light source. In addition, high peel strength was exhibited even without corona treatment. It is thought that this is because the reactivity-imparting compound of Example 4 had a 3-trifluoromethyl-3-phenyldiazirine skeleton, the photolysis efficiency of the diazirine group was improved, and not only the O-H insertion reaction of the generated carbenes but also a C-H insertion reaction became possible.

Based on the above results, it is thought that the reactivity-imparting compound having a diazirine group is very useful as a photoreactive molecular bonding agent.

### [Industrial Applicability]

According to the reactivity-imparting compound, method for producing a reactivity-imparting compound, and layered body of the present invention, it is possible to suppress photodegradation of a base material and obtain high adhesion, and therefore, the industrial applicability is significant.

### [Reference Signs List]

- 1: Base material
- 2: Reactivity-imparting compound layer
- 3: Metal layer
- 100: Layered body

## Claims

1. A reactivity-imparting compound, comprising, in one molecule:
a silane coupling moiety represented by Formula (1); and
a diazirine group,
wherein the reactivity-imparting compound is a compound represented by Formula (2), 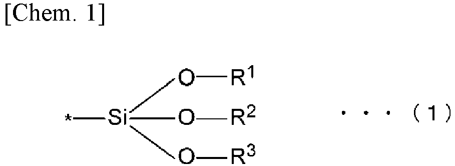 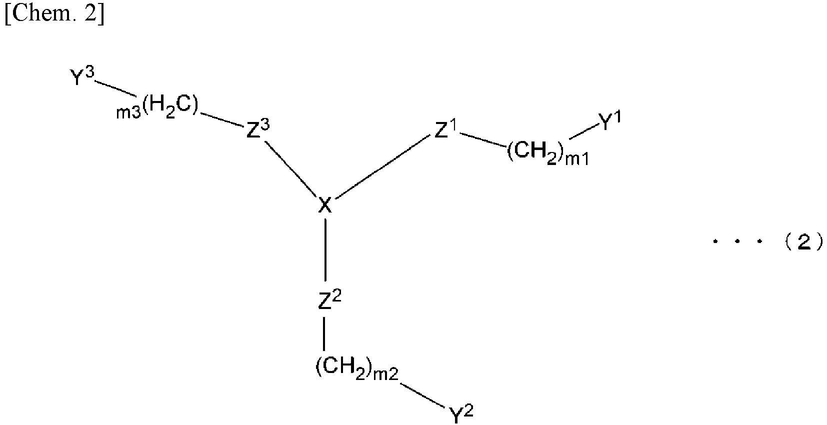 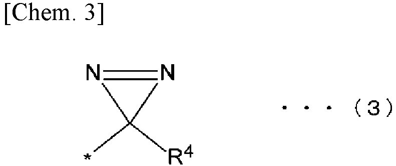 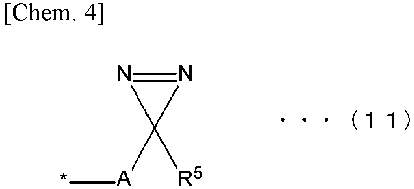
[in Formula (1), * represents an adjacent carbon atom, and R¹, R², and R³ each represents a hydrogen atom or an alkyl group and may be the same as or different from each other],
[in Formula (2), X represents a triazine ring or a benzene ring, Z¹, Z², and Z³ each represents any one of O, NH, S, or CH₂, m1, m2, and m3 each represents an integer of 1 to 10, Y¹, Y², and Y³ are each the silane coupling moiety or a diazirine group represented by Formula (3) or (11) above, at least one of Y¹, Y², and Y³ is the silane coupling moiety, and at least one of Y¹, Y², and Y³ is the diazirine group; in Formula (3) above, * represents an adjacent carbon atom and R⁴ is an arbitrary functional group; and in Formula (11) above, * represents an adjacent carbon atom, R⁵ is an arbitrary functional group, and A is an arylene group or a divalent heterocyclic group].

2. The reactivity-imparting compound according to claim 1,
wherein the X is a triazine ring.

3. The reactivity-imparting compound according to claim 1 or 2,
wherein Z¹, Z², and Z³ are each NH or O.

4. The reactivity-imparting compound according to claim 3, which is a compound represented by Formula (4).

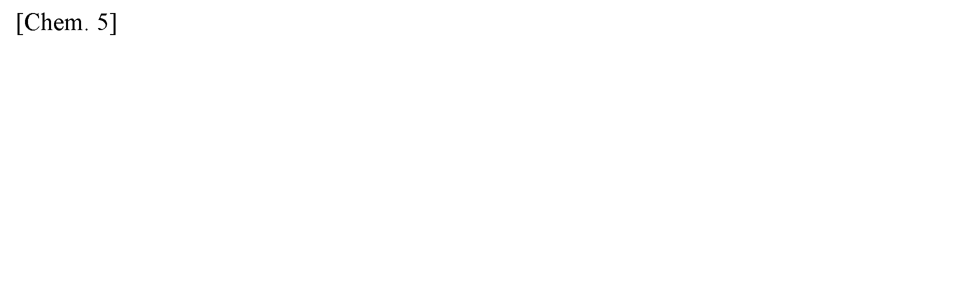

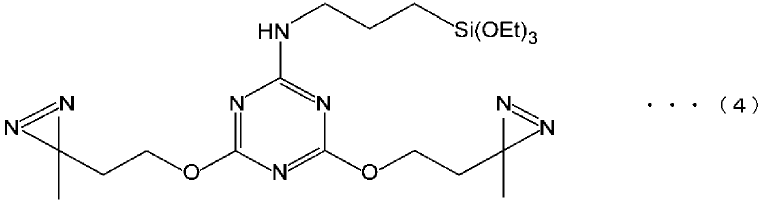

5. The reactivity-imparting compound according to claim 3, which is a compound represented by Formula (12).

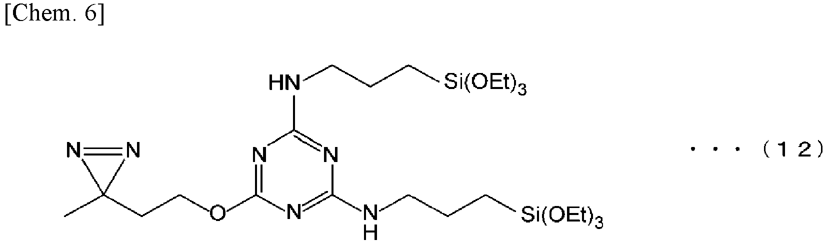

6. The reactivity-imparting compound according to claim 3, which is a compound represented by Formula (13).

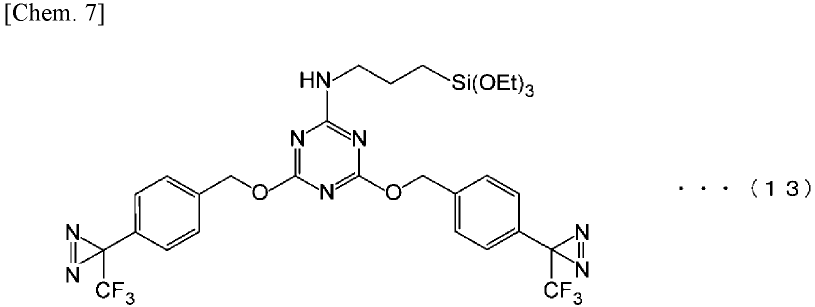

7. The reactivity-imparting compound according to claim 3, which is a compound represented by Formula (14).

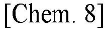

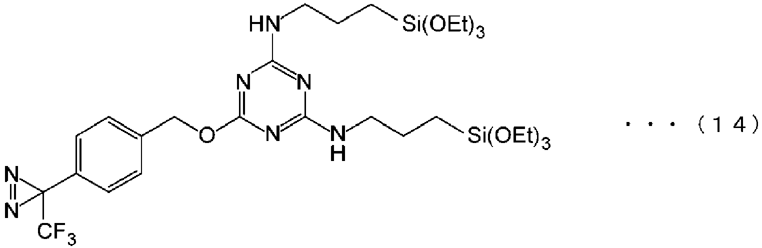

8. A method for producing a reactivity-imparting compound, comprising:
a diazirine group-imparting step of reacting a compound containing a trihalogenated triazine ring with a compound, which contains a hydroxyl group and a diazirine group, to obtain a diazirine group-imparted compound to which one or more diazirine groups are imparted; and
a silane coupling moiety-imparting step of reacting the diazirine group-imparted compound with a compound, which contains an amino group and a silane coupling moiety, the silane coupling moiety being represented by Formula (6) below, 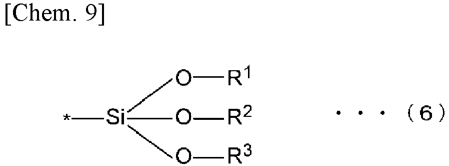
[in Formula (6), * represents an adjacent carbon atom, and R¹, R², and R³ each represents a hydrogen atom or an alkyl group and may be the same as or different from each other].

9. The method for producing a reactivity-imparting compound according to claim 8,
wherein, in the diazirine group-imparting step, two diazirine groups are imparted.

10. The method for producing a reactivity-imparting compound according to claim 8 or 9,
wherein a compound of Formula (18) below is reacted with 3-aminopropyltriethoxysilane to obtain a compound of Formula (4) below.

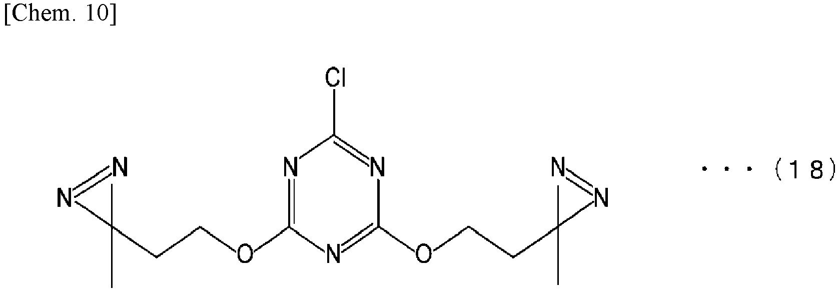

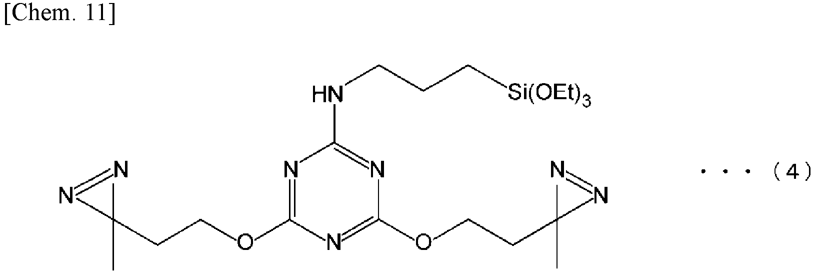

11. The method for producing a reactivity-imparting compound according to claim 8 or 9,
wherein a compound of Formula (20) below is reacted with 3-aminopropyltriethoxysilane to obtain a compound of Formula (13) below.

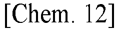

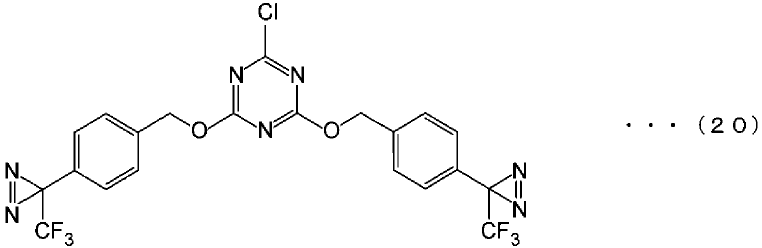

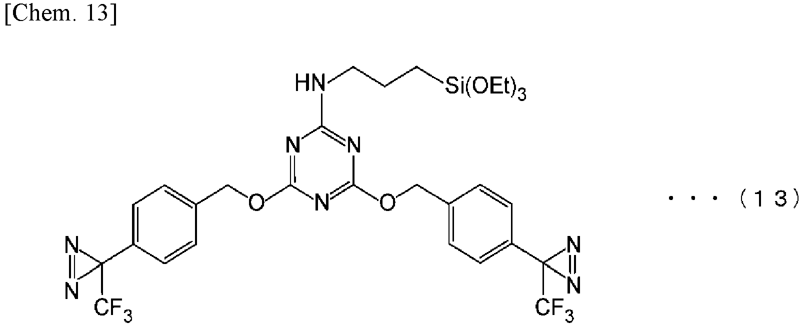

12. The method for producing a reactivity-imparting compound according to claim 8,
wherein, in the diazirine group-imparting step, one diazirine group is imparted.

13. The method for producing a reactivity-imparting compound according to claim 8 or 12,
wherein a compound of Formula (15) below is reacted with 3-aminopropyltriethoxysilane to obtain a compound of Formula (12) below.

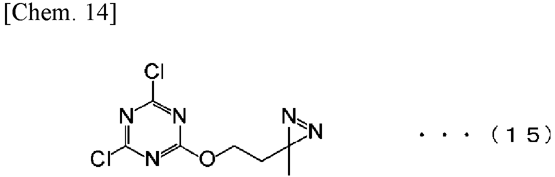

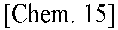

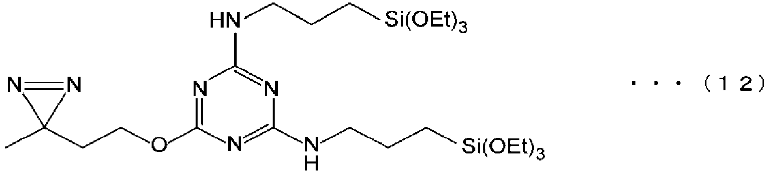

14. The method for producing a reactivity-imparting compound according to claim 8 or 12,
wherein a compound of Formula (17) below is reacted with 3-aminopropyltriethoxysilane to obtain a compound of Formula (14) below.

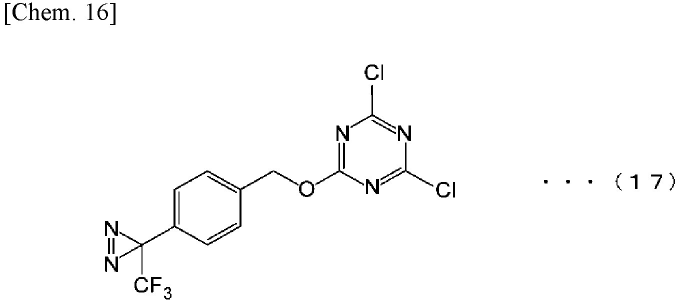

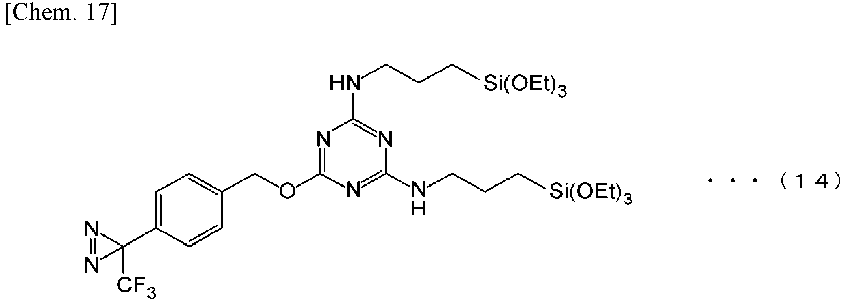

15. A layered body comprising:
a first base material;
a reactivity-imparting compound layer which is provided on the first base material and composed of the reactivity-imparting compound according to any one of claims 1 to 7; and
a second base material provided on the reactivity-imparting compound layer.

## Patentansprüche

1. Reaktivitätsverleihende Verbindung, aufweisend in einem Molekül:
eine Silan-Kopplungsgruppe, dargestellt durch Formel (1); und
eine Diazirin-Gruppe,
wobei die reaktivitätsverleihende Verbindung eine durch Formel (2) dargestellte Verbindung ist, 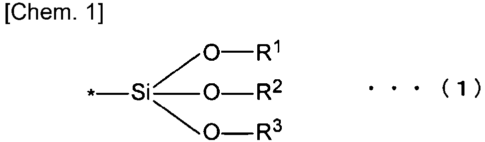 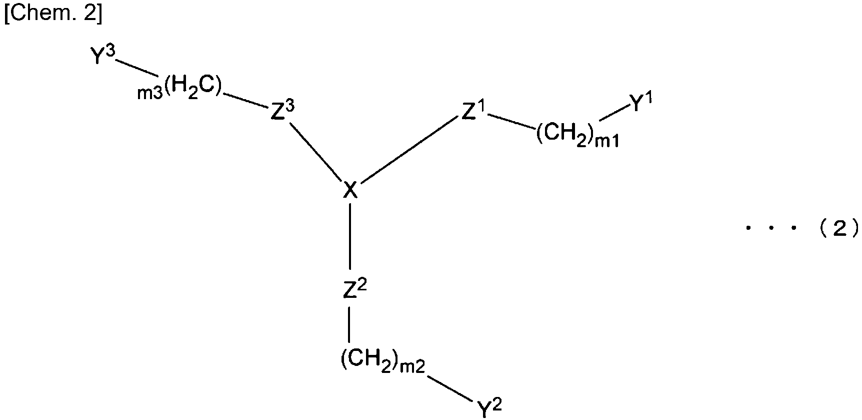 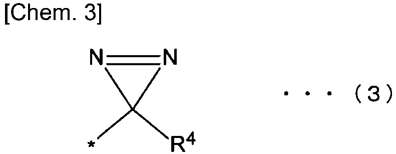 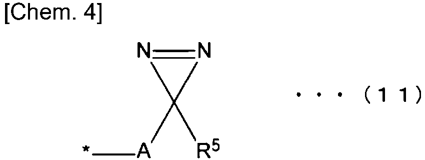
[wobei in Formel (1) * ein benachbartes Kohlenstoffatom darstellt, und R¹, R² und R³ jeweils ein Wasserstoffatom oder eine Alkylgruppe darstellen und gleich oder verschieden voneinander sein können],
[wobei in Formel (2) X einen Triazinring oder einen Benzolring darstellt, Z¹, Z² und Z³ jeweils unabhängig voneinander O, NH, S oder CH₂ darstellen, m1, m2 und m3 jeweils eine ganze Zahl von 1 bis 10 darstellen, Y¹, Y² und Y³ jeweils die Silan-Kopplungsgruppe oder eine durch die obige Formel (3) oder (11) dargestellte Diazirin-Gruppe darstellen, wobei mindestens eine von Y¹, Y² und Y³ die Silan-Kopplungsgruppe ist, und mindestens eine von Y¹, Y² und Y³ die Diazirin-Gruppe ist; wobei in der obigen Formel (3) * ein benachbartes Kohlenstoffatom darstellt und R⁴ eine beliebige funktionelle Gruppe ist; und wobei in der obigen Formel (11) * ein benachbartes Kohlenstoffatom darstellt, R⁵ eine beliebige funktionelle Gruppe ist und A eine Arylengruppe oder eine zweiwertige heterocyclische Gruppe ist].

2. Reaktivitätsverleihende Verbindung nach Anspruch 1,
wobei X ein Triazinring ist.

3. Reaktivitätsverleihende Verbindung nach Anspruch 1 oder 2,
wobei Z¹, Z² und Z³ jeweils NH oder O sind.

4. Reaktivitätsverleihende Verbindung nach Anspruch 3, die eine durch Formel (4) dargestellte Verbindung ist.

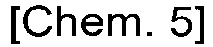

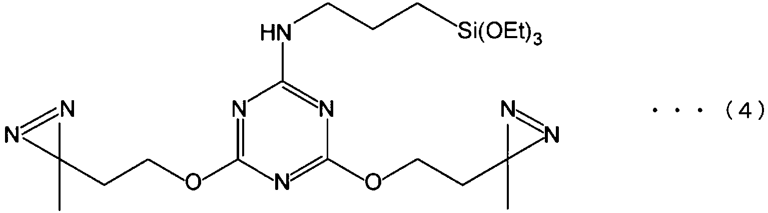

5. Reaktivitätsverleihende Verbindung nach Anspruch 3, die eine durch Formel (12) dargestellte Verbindung ist.

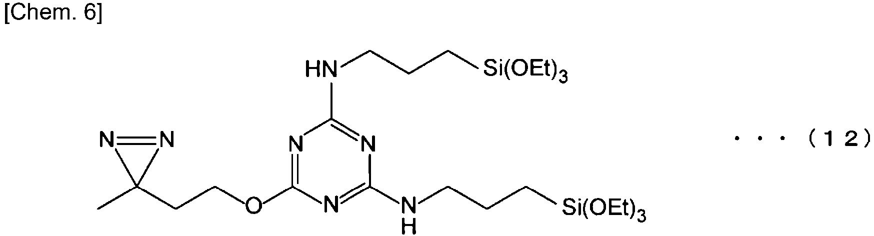

6. Reaktivitätsverleihende Verbindung nach Anspruch 3, die eine durch Formel (13) dargestellte Verbindung ist.

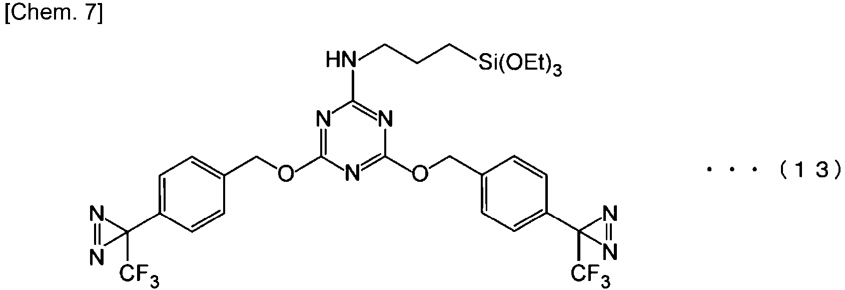

7. Reaktivitätsverleihende Verbindung nach Anspruch 3, die eine durch Formel (14) dargestellte Verbindung ist.

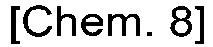

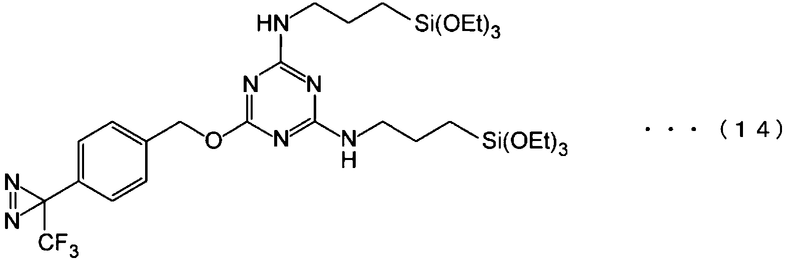

8. Verfahren zur Herstellung einer reaktivitätsverleihenden Verbindung, aufweisend:
einen Diazirin-Gruppen-Verleihungsschritt, bei dem eine Verbindung, die einen trihalogenierten Triazinring aufweist, mit einer Verbindung umgesetzt wird, die eine Hydroxylgruppe und eine Diazirin-Gruppe aufweist, um eine Diazirin-gruppenverliehene Verbindung zu erhalten, der eine oder mehrere Diazirin-Gruppen verliehen sind; und
einen Silan-Kopplungsgruppen-Verleihungsschritt, bei dem die Diazirin-gruppenverliehene Verbindung mit einer Verbindung umgesetzt wird, die eine Aminogruppe und eine Silan-Kopplungsgruppe aufweist, wobei die Silan-Kopplungsgruppe durch die nachstehende Formel (6) dargestellt ist, 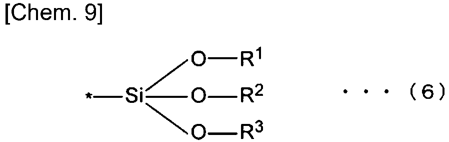
[wobei in Formel (6) * ein benachbartes Kohlenstoffatom darstellt, und R¹, R² und R³ jeweils ein Wasserstoffatom oder eine Alkylgruppe darstellen und gleich oder verschieden voneinander sein können].

9. Verfahren zur Herstellung einer reaktivitätsverleihenden Verbindung nach Anspruch 8,
wobei im Diazirin-Gruppen-Verleihungsschritt zwei Diazirin-Gruppen verliehen werden.

10. Verfahren zur Herstellung einer reaktivitätsverleihenden Verbindung nach Anspruch 8 oder 9,
wobei eine durch die nachstehende Formel (18) dargestellte Verbindung mit 3-Aminopropyltriethoxysilan umgesetzt wird, um eine durch die nachstehende Formel (4) dargestellte Verbindung zu erhalten.

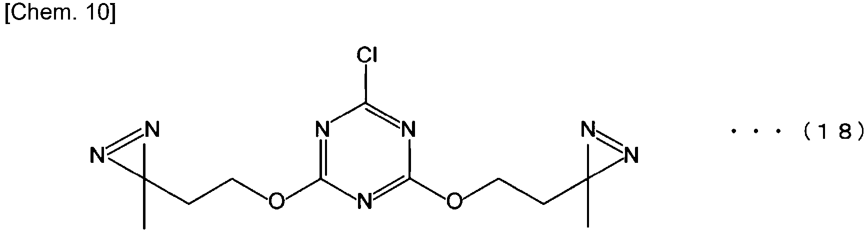

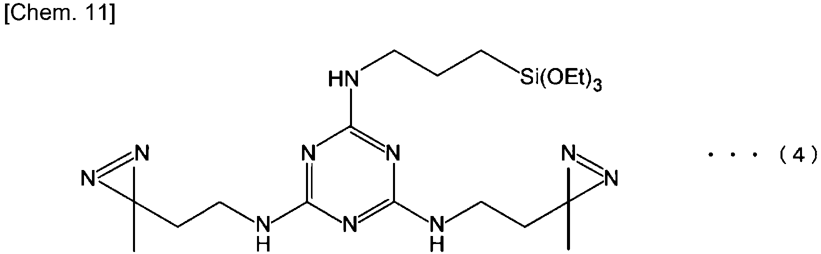

11. Verfahren zur Herstellung einer reaktivitätsverleihenden Verbindung nach Anspruch 8 oder 9,
wobei eine durch die nachstehende Formel (20) dargestellte Verbindung mit 3-Aminopropyltriethoxysilan umgesetzt wird, um eine durch die nachstehende Formel (13) dargestellte Verbindung zu erhalten.

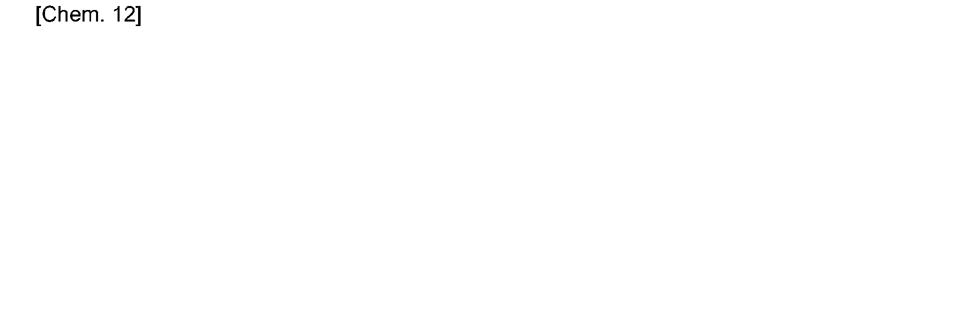

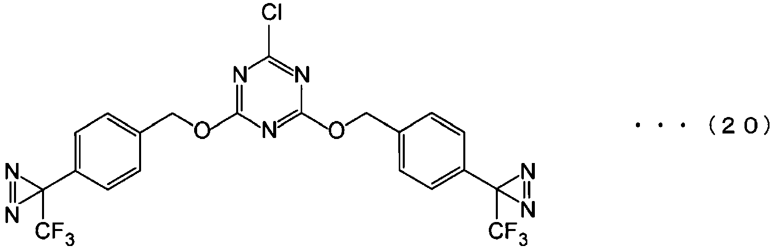

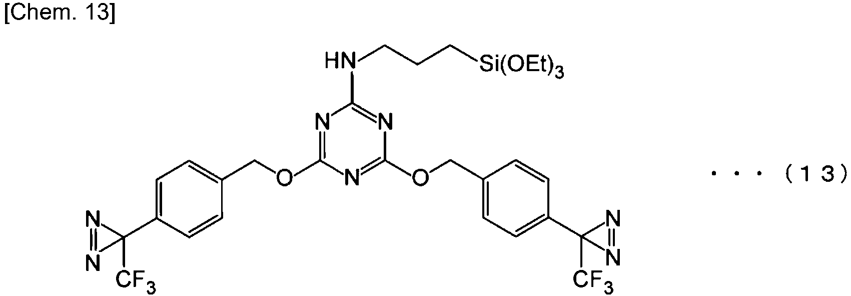

12. Verfahren zur Herstellung einer reaktivitätsverleihenden Verbindung nach Anspruch 8,
wobei im Diazirin-Gruppen-Verleihungsschritt eine Diazirin-Gruppe verliehen wird.

13. Verfahren zur Herstellung einer reaktivitätsverleihenden Verbindung nach Anspruch 8 oder 12,
wobei eine durch die nachstehende Formel (15) dargestellte Verbindung mit 3-Aminopropyltriethoxysilan umgesetzt wird, um eine durch die nachstehende Formel (12) dargestellte Verbindung zu erhalten.

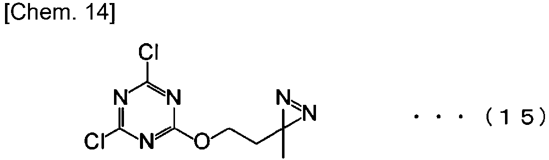

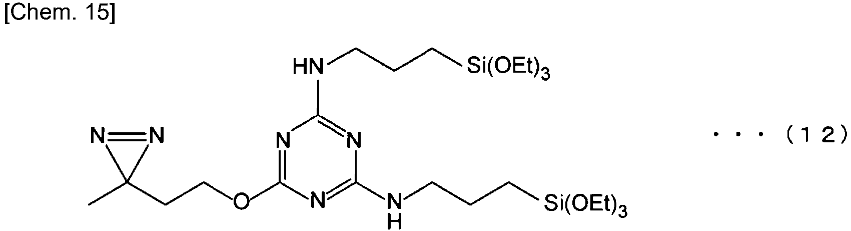

14. Verfahren zur Herstellung einer reaktivitätsverleihenden Verbindung nach Anspruch 8 oder 12,
wobei eine durch die nachstehende Formel (17) dargestellte Verbindung mit 3-Aminopropyltriethoxysilan umgesetzt wird, um eine durch die nachstehende Formel (14) dargestellte Verbindung zu erhalten.

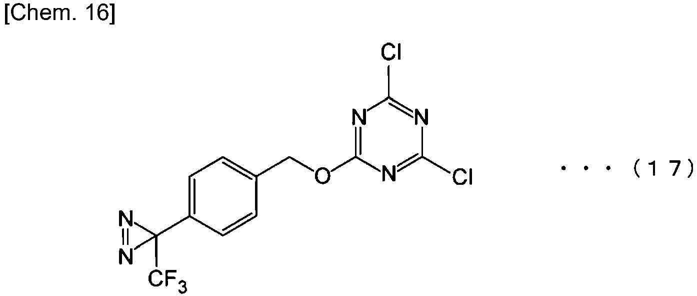

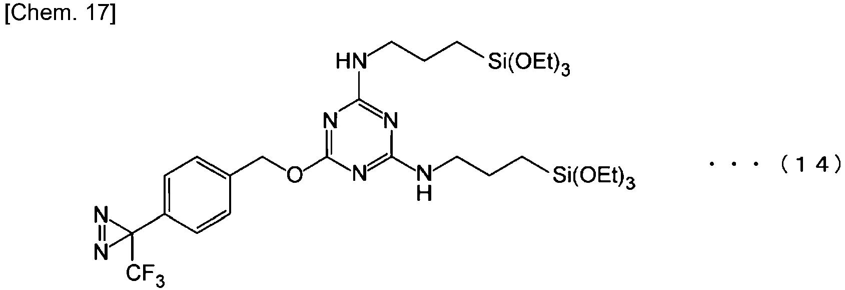

15. Schichtkörper, aufweisend:
ein erstes Basismaterial;
eine reaktivitätsverleihende-Verbindungs-Schicht, die auf dem ersten Basismaterial vorgesehen ist und aus der reaktivitätsverleihenden Verbindung nach einem der Ansprüche 1 bis 7 besteht; und
ein zweites Basismaterial, das auf der reaktivitätsverleihenden-Verbindungs-Schicht vorgesehen ist.

## Revendications

1. Composé conférant une réactivité, comprenant, dans une molécule :
une fraction de couplage au silane représentée par la formule (1) ; et
un groupe diazirine,
dans lequel le composé conférant une réactivité est un composé représenté par la formule (2), 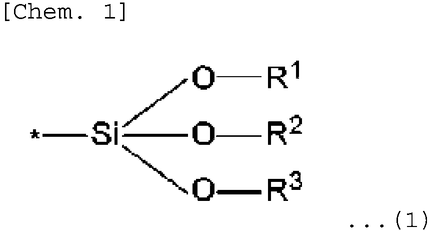 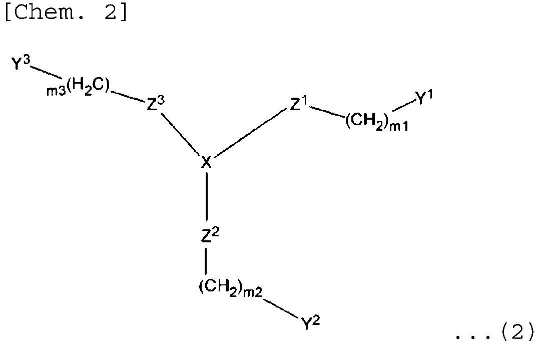 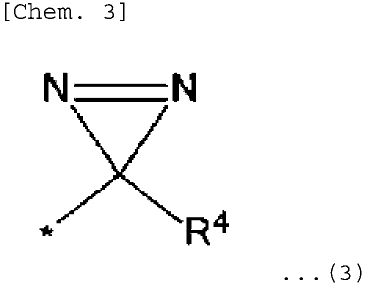 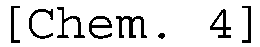 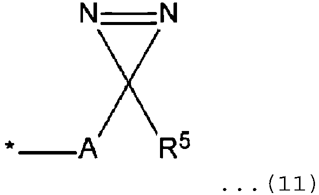
[dans la formule (1), * représente un atome de carbone adjacent, et R¹, R², et R³ représentent chacun un atome d'hydrogène ou un groupe alkyle et peuvent être identiques les uns aux autres ou différents les uns des autres],
[dans la Formule (2), X représente un cycle triazine ou un cycle benzène, Z¹, Z², et Z³ représentent chacun l'un quelconque parmi O, NH, S ou CH₂, m1, m2 et m3 représentent chacun un entier de 1 à 10, Y¹, Y², et Y³ sont chacun la fraction de couplage au silane ou un groupe diazirine représenté par la Formule (3) ou (11) ci-dessus, au moins l'un parmi Y¹, Y², et Y³ est la fraction de couplage au silane, et au moins l'un parmi Y¹, Y², et Y³ est le groupe diazirine ; dans la formule (3) ci-dessus, * représente un atome de carbone adjacent et R⁴ est un groupe fonctionnel arbitraire ; et dans la formule (11) ci-dessus, * représente un atome de carbone adjacent, R⁵ est un groupe fonctionnel arbitraire, et A est un groupe arylène ou un groupe hétérocyclique divalent] .

2. Composé conférant une réactivité selon la revendication 1,
dans lequel le X est un cycle triazine.

3. Composé conférant une réactivité selon la revendication 1 ou 2,
dans lequel Z¹, Z² et Z³ sont chacun NH ou O.

4. Composé conférant une réactivité selon la revendication 3, qui est un composé représenté par la formule (4).

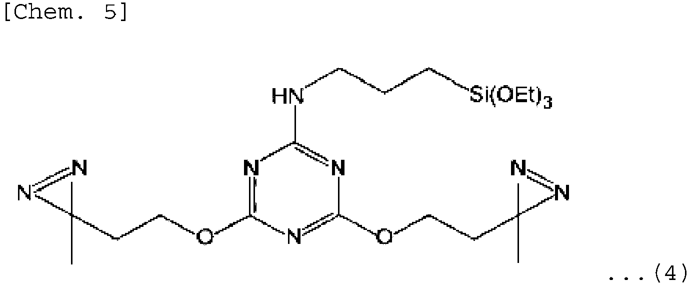

5. Composé conférant une réactivité selon la revendication 3, qui est un composé représenté par la formule (12).

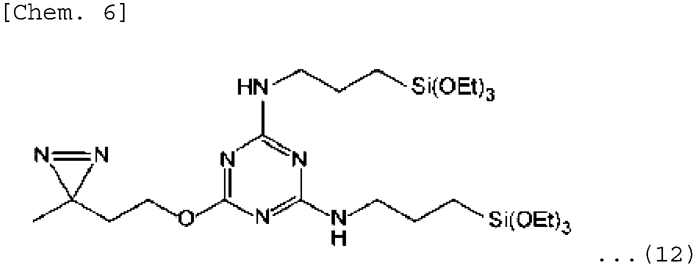

6. Composé conférant une réactivité selon la revendication 3, qui est un composé représenté par la formule (13).

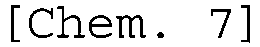

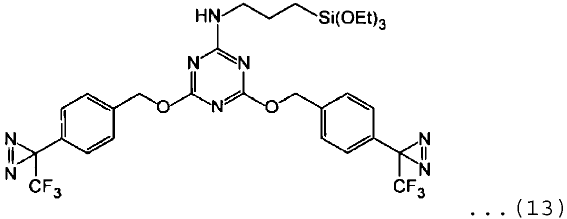

7. Composé conférant une réactivité selon la revendication 3, qui est un composé représenté par la formule (14).

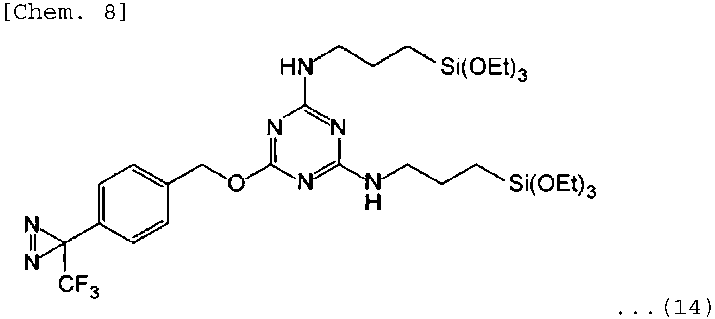

8. Procédé de production d'un composé conférant une réactivité, comprenant :
une étape conférant un groupe diazirine consistant mettre en réaction un composé contenant un cycle triazine trihalogéné avec un composé, qui contient un groupe hydroxyle et un groupe diazirine, pour obtenir un composé à groupe diazirine conféré auquel un ou plusieurs groupes diazirine sont conférés ; et
une étape conférant une fraction de couplage au silane consistant à mettre en réaction le composé à groupe diazirine conféré avec un composé, qui contient un groupe amino et une fraction de couplage au silane, la fraction de couplage au silane étant représentée par la formule (6) ci-dessous, 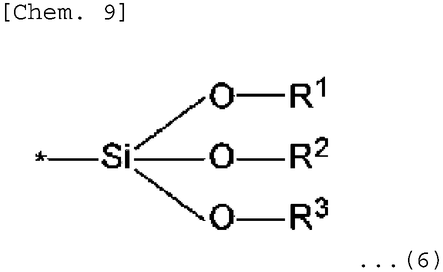
[dans la formule (6), * représente un atome de carbone adjacent, et R¹, R², et R³ représentent chacun un atome d'hydrogène ou un groupe alkyle et peuvent être identiques les uns aux autres ou différents les uns des autres].

9. Procédé de production d'un composé conférant une réactivité selon la revendication 8,
dans lequel, dans l'étape conférant un groupe diazirine, deux groupes diazirine sont conférés.

10. Procédé de production d'un composé conférant une réactivité selon la revendication 8 ou 9,
dans lequel un composé de formule (18) ci-dessous est mis en réaction avec du 3-aminopropyltriéthoxysilane pour obtenir un composé de formule (4) ci-dessous.

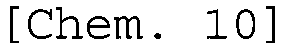

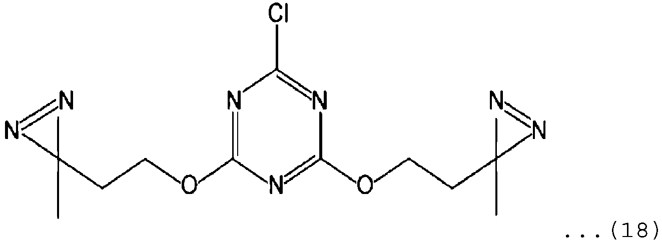

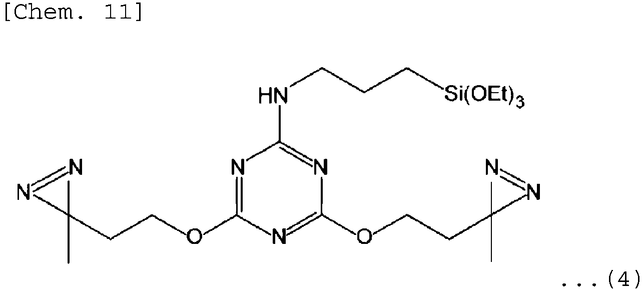

11. Procédé de production d'un composé conférant une réactivité selon la revendication 8 ou 9,
dans lequel un composé de formule (20) ci-dessous est mis en réaction avec du 3-aminopropyltriéthoxysilane pour obtenir un composé de formule (13) ci-dessous.

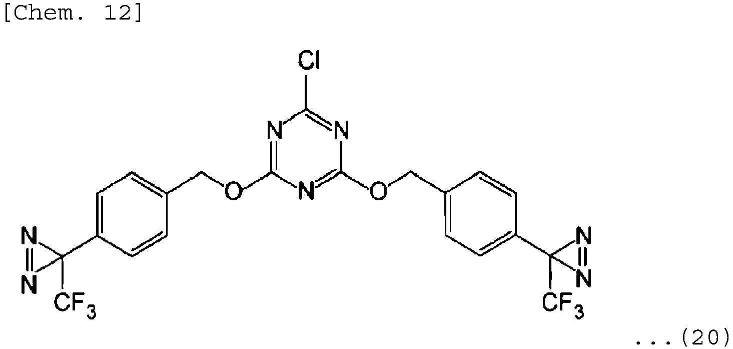

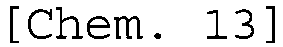

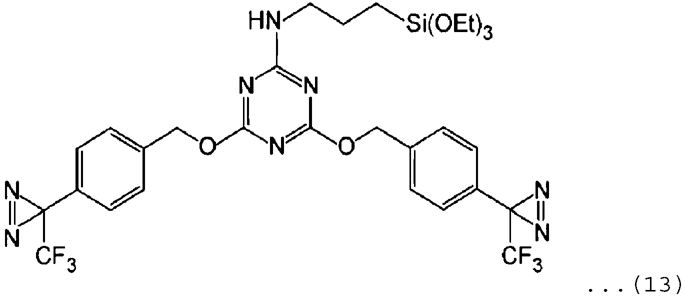

12. Procédé de production d'un composé conférant une réactivité selon la revendication 8,
dans lequel, dans l'étape conférant un groupe diazirine, un groupe diazirine est conféré.

13. Procédé de production d'un composé conférant une réactivité selon la revendication 8 ou 12,
dans lequel un composé de formule (15) ci-dessous est mis en réaction avec du 3-aminopropyltriéthoxysilane pour obtenir un composé de formule (12) ci-dessous.

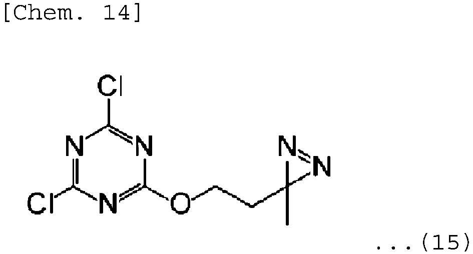

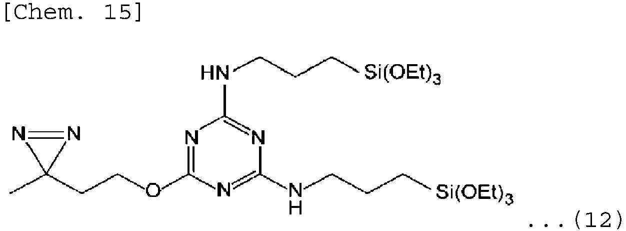

14. Procédé de production d'un composé conférant une réactivité selon la revendication 8 ou 12,
dans lequel un composé de formule (17) ci-dessous est mis en réaction avec du 3-aminopropyltriéthoxysilane pour obtenir un composé de formule (14) ci-dessous.

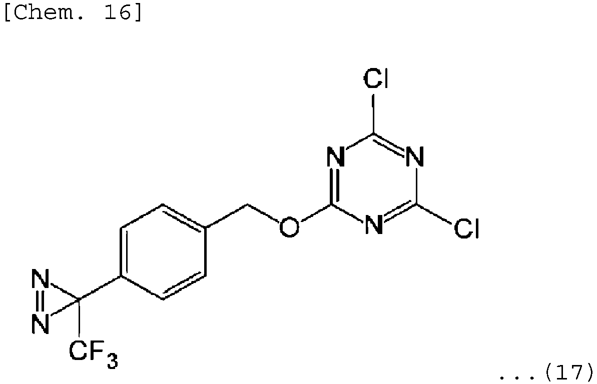

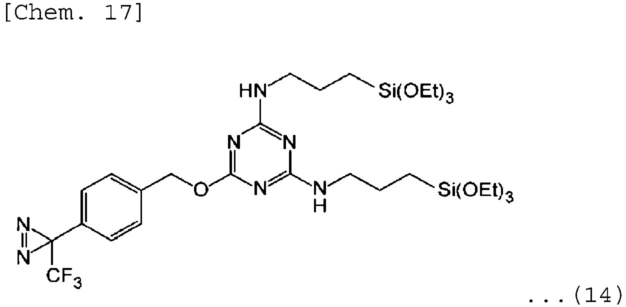

15. Corps stratifié comprenant :
un premier matériau de base ;
une couche de composé conférant une réactivité qui est prévue sur le premier matériau de base et composée du composé conférant une réactivité selon l'une quelconque des revendications 1 à 7 ; et
un second matériau de base prévu sur la couche de composé conférant une réactivité.
